# EUROPÄISCHE PATENTSCHRIFT

(11) **EP 3 243 263 B1**
(45) Veröffentlichungstag und Bekanntmachung des Hinweises auf die Patenterteilung: **07.11.2018**
(21) Anmeldenummer: 16766887.0
(22) Anmeldetag: 08.09.2016
(51) Int. Cl.: H02K 41/03, H02K 1/27

(54) **MAGNETANORDNUNG FÜR EINEN ELEKTRISCHEN MOTOR**
MAGNETIC ASSEMBLY FOR AN ELECTRIC MOTOR
ENSEMBLE D'AIMANTS POUR MOTEUR ÉLECTRIQUE

(30) Priorität: 11.09.2015 DE 102015115347
(43) Veröffentlichungstag der Anmeldung: 15.11.2017
(73) Patentinhaber: Beckhoff Automation GmbH, 33415 Verl (DE)
(72) Erfinder: PRÜSSMEIER, Uwe, 32657 Lemgo (DE)
(74) Vertreter: Patentanwaltskanzlei WILHELM & BECK
(86) Internationale Anmeldenummer: PCT/EP2016/071180
(87) Internationale Veröffentlichungsnummer: WO 2017/042273

(56) Entgegenhaltungen:
- CN-A- 103 208 867
- CN-A- 104 333 150
- CN-A- 104 467 343
- US-A1- 2011 014 363

## Beschreibung

Die vorliegende Erfindung betrifft eine Magnetanordnung für einen elektrischen Motor, einen Läufer für einen elektrischen Motor und einen elektrischen Motor.

Elektrische Motoren werden unter anderem in der Automatisierungstechnik für Servomotoren, Schrittmotoren oder Linearantriebe eingesetzt. Elektrische Motoren können als rotatorische Motoren oder als Linearmotoren ausgebildet sein. Bei einem rotatorischen Motor wird ein sich drehender Läufer oder Rotor durch elektromagnetische Wechselwirkung mit einem feststehenden Stator angetrieben. Bei einem Linearmotor findet die für den Antrieb notwendige elektromagnetische Wechselwirkung zwischen einem Stator und einem entlang eines Pfades beweglichen Läufer statt.

Bei permanenterregten elektrischen Motoren wird die Antriebskraft durch elektromagnetische Wechselwirkung zwischen Antriebsmagneten und stromdurchflossenen Antriebsspulen des Motors erzeugt. Je nach Bauart des elektrischen Motors kann entweder der Stator des Motors die Antriebsspulen und der Läufer die Antriebsmagnete, oder aber der Stator kann die Antriebsmagnete und der Läufer die Antriebsspulen umfassen.

Als Antriebsmagnete werden üblicherweise Permanentmagnete in einer aus mehreren Antriebsmagneten bestehenden Magnetanordnung eingesetzt. Dabei weisen benachbarte Antriebsmagnete der Magnetanordnung eine entgegengesetzte Magnetisierung auf, so dass entlang der Magnetanordnung ein magnetisches Wechselfeld erzeugt wird. Die Antriebsspulen werden üblicherweise um Polzähne gewickelt, welche ein Material hoher magnetischer Permeabilität, in der Regel Eisen, aufweisen und die magnetische Flussdichte erhöhen.

Bei elektrischen Motoren mit Permanenterregung treten störende Rastmomente, insbesondere Nutrastmomente auf, welche durch magnetische Wechselwirkung der Antriebsmagnete mit den Polzähnen verursacht werden. Die Rastmomente können unter anderem reduziert werden durch eine Anpassung der Geometrien der Antriebsmagnete und der Polzähne, insbesondere durch eine geeignete Anpassung der Anzahl und Abmessungen der Antriebsmagnete und Polzähne, sowie durch eine geeignete Anpassung des Polbedeckungsfaktors der Antriebsmagnete.

Neben einer Reduktion der Rastmomente sind eine möglichst große und möglichst gleichmäßige Krafteinwirkung auf den Läufer, eine möglichst hohe Dynamik und eine möglichst hohe Leistungsdichte Ziele bei der Auslegung eines elektrischen Motors. Die Antriebskraft, die auf den Läufer des elektrischen Motors ausgeübt werden kann, wird üblicherweise limitiert durch die maximale Magnetfeldstärke, welche von den Antriebsmagneten am Ort der Antriebsspulen erzeugt werden kann.

Um die Magnetfeldstärke der Antriebsmagneten am Ort der Antriebsspulen zu erhöhen, wird auf einer den Antriebsspulen abgewandten Seite der Magnetanordnung oftmals eine Rückschlussplatte aus einem ferromagnetischen Material angeordnet. Durch die Rückschlussplatte wird der Rückschluss der magnetischen Feldlinien der Antriebsmagneten auf deren spulenabgewandter Seite verbessert und die Flussdichte auf der spulenzugewandten Seite erhöht. Eine Magnetanordnung mit Rückschlussplatte wird unter anderem in der Druckschrift DE102011075445A1 beschrieben. Bei einem elektrischen Motor, bei welchen die Antriebsmagnete an dem beweglichen Läufer angeordnet sind, vergrößert eine Rückschlussplatte die bewegte Masse des Motors, was sich nachteilig auf dessen Dynamik auswirkt.

Das an den Antriebsspulen erzeugte Magnetfeld kann auch erhöht werden, indem die Antriebsmagnete in einer als Halbach-Anordnung ausgebildeten Magnetanordnung angeordnet werden. Bei einer Halbach-Anordnung wird jeweils zwischen zwei entgegengesetzt gepolten Antriebsmagneten ein Kompensationsmagnet angeordnet, dessen Magnetfeld das Magnetfeld der Antriebsmagnete auf der spulenzugewandten Seite der Magnetanordnung verstärkt und auf der spulenabgewandten Seite der Magnetanordnung kompensiert. In der Druckschrift US 8 863 669 B2 wird eine Verwendung einer als Halbach-Anordnung ausgebildeten Magnetanordnung in einem elektrischen Linearmotor erwähnt. Nachteilig an einer solchen Magnetanordnung sind die dabei auftretenden hohen Rastmomente.

Aus der Druckschrift US 7 538 469 B2 ist ein elektrischer Linearmotor mit einer als eine modifizierte Halbach-Anordnung ausgebildeten Magnetanordnung bekannt. Bei der modifizierten Halbach-Anordnung weisen die Kompensationsmagneten der Magnetanordnung jeweils die halbe Breite der Antriebsmagneten auf. Dies reduziert die Rastmomente, führt aber lediglich zu einer unvollkommenen Kompensation des Magnetfeldes auf der spulenabgewandten Seite. Daher umfasst die in der Druckschrift US7538469B2 beschriebene Magnetanordnung eine Rückschlussplatte, um den magnetischen Widerstand für das auf der spulenabgewandten Seite aus der Magnetanordnung austretenden Magnetfeld zu verringern.

Aus der Druckschrift CN 103 208 867 A ist eine Magnetanordnung in Halbach-Konfiguration bekannt. Die Magnete der offenbarten Magnetanordnung weisen zwischen einer spulenzugewandten Seite und einer spulenabgewandten Seite der Magnetanordnung jeweils trapezförmige Querschnittsflächen auf. Dabei hinterschneiden die Querschnittsflächen der Kompensationsmagnete die Querschnittsflächen der Antriebsmagnete.

Die Druckschriften CN 104 467 343 A und CN 104 333 150 A zeigen jeweils ebenfalls Magnetanordnungen in Halbach-Konfiguration.

Aufgabe der vorliegenden Erfindung ist es, eine verbesserte Magnetanordnung für einen elektrischen Motor bereitzustellen, welche die oben genannten Nachteile vermeidet. Außerdem ist es Ziel der vorliegenden Erfindung, einen verbesserten Läufer für einen elektrischen Motor, sowie einen verbesserten elektrischen Motor bereitzustellen.

Diese Aufgaben werden durch eine Magnetanordnung gemäß Anspruch 1, einen Läufer für einen elektrischen Motor gemäß Anspruch 5 und einen elektrischen Motor gemäß Anspruch 6 gelöst. Weitere vorteilhafte Ausführungen sind jeweils in den abhängigen Ansprüchen angegeben.

Eine Magnetanordnung zur Wechselwirkung mit Antriebsspulen eines elektrischen Motors umfasst einen ersten Antriebsmagneten, einen zweiten Antriebsmagneten und einen Kompensationsmagneten, welche zwischen einer spulenzugewandten Seite der Magnetanordnung und einer spulenabgewandten Seite der Magnetanordnung angeordnet sind. Der Kompensationsmagnet ist zwischen dem ersten Antriebsmagneten und dem zweiten Antriebsmagneten angeordnet. Der erste Antriebsmagnet weist eine erste Querschnittsfläche, der zweite Antriebsmagnet weist eine zweite Querschnittsfläche und der Kompensationsmagnet weist eine dritte Querschnittsfläche auf. Eine spulenzugewandte Breite der ersten Querschnittsfläche und eine spulenzugewandte Breite der zweiten Querschnittsfläche ist jeweils größer als eine spulenzugewandte Breite der dritten Querschnittsfläche. Eine spulenabgewandte Breite der dritten Querschnittsfläche ist größer als die spulenzugewandte Breite der dritten Querschnittsfläche und die dritte Querschnittsfläche hinterschneidet die erste Querschnittsfläche und die zweite Querschnittsfläche auf der spulenabgewandten Seite.

Der Kompensationsmagnet kann in Bewegungsrichtung des elektrischen Motors vollständig oder teilweise zwischen den Antriebsmagneten angeordnet sein. Bei einem Linearmotor ist die Bewegungsrichtung entlang des Pfades gerichtet, entlang dessen sich der Läufer des Motors bewegt. Bei einem rotatorischen Motor entspricht die Bewegungsrichtung der Rotationsrichtung des Motors.

Eine Magnetanordnung, bei der eine spulenzugewandte Breite eines Kompensationsmagneten zwischen einem ersten Antriebsmagneten und einem zweiten Antriebsmagneten kleiner ist als eine spulenzugewandte Breite des ersten bzw. zweiten Antriebsmagneten, erlaubt es vorteilhafterweise, den Magnetabstand zwischen dem ersten Antriebsmagneten und dem zweiten Antriebsmagneten kleiner als die spulenzugewandte Breite der Antriebsmagneten auszuführen. Dadurch kann eine optimale Wechselwirkung der Magnetanordnung mit Antriebsspulen des elektrischen Motors erreicht werden. Insbesondere können die spulenzugewandte Breite des ersten und des zweiten Antriebsmagneten, sowie der Abstand zwischen dem ersten und dem zweiten Antriebsmagneten derart angepasst werden, dass eine möglichst große und gleichmäßige Kraftübertragung zwischen den Antriebsspulen und der Magnetanordnung des elektrischen Motors erfolgt und gleichzeitig möglichst geringe Rastmomente bei einer relativen Bewegung der Magnetanordnung gegenüber den Antriebsspulen des elektrischen Motors auftreten. Mittels des Kompensationsmagneten können von der Magnetanordnung auf deren spulenzugewandter Seite vorteilhaft große magnetische Feldstärken generiert werden.

Die erste Querschnittsfläche, die zweite Querschnittfläche und die dritte Querschnittsfläche können in einer gemeinsamen Schnittebene durch die Magnetanordnung liegen, welche parallel zu Spulenachsen der Antriebsspulen des elektrischen Motors orientiert ist. Beispielsweise können die Spulenachsen in der Schnittebene liegen.

Bei dem elektrischen Motor kann es sich um einen rotatorischen Motor, beispielswiese um einen rotatorischen Synchronmotor, mit einem entlang eines gekrümmten Pfades beweglichen Läufer handeln. In diesem Fall kann sich die Schnittebene in radialer Richtung erstrecken und senkrecht zu der Rotationsachse des elektrischen Motors orientiert sein. Der erste Antriebsmagnet, der zweite Antriebsmagnet und der Kompensationsmagnet können in diesem Fall jeweils als Teil einer Zylinderschale ausgebildet sein, wobei die Achse der Zylinderschale mit der Rotationsachse des Motors zusammenfällt.

Bei dem elektrischen Motor kann es sich aber auch um einen Linearmotor, beispielsweise um einen linearen Synchronmotor, mit einem entlang eines geraden Pfades beweglichen Läufer handeln. In diesen Fällen kann die Schnittebene, die die erste, zweite und dritte Querschnittsfläche enthält, parallel zu dem Pfad orientiert sein, entlang dessen der Läufer beweglich ist.

Bei einem Linearmotor kann die Form des ersten Antriebsmagneten, des zweiten Antriebsmagneten und des Kompensationsmagneten jeweils einem allgemeinen Zylinder entsprechen, dessen Grundfläche jeweils die erste, zweite bzw. dritte Querschnittsfläche bildet und dessen Zylinderachse senkrecht zu den Spulenachsen der Antriebsspulen orientiert ist. Der Zylinder kann entweder ein gerader bzw. senkrechter Zylinder sein, bei dem eine Zylinderachse senkrecht auf der Grundfläche steht, er kann aber auch ein schiefer Zylinder sein, bei welchem die Zylinderachse nicht senkrecht zur Grundfläche orientiert ist.

Sowohl bei einem rotatorischen Motor, als auch bei einem Linearmotor kann die spulenzugewandte Breite der dritten Querschnittsfläche des Kompensationsmagneten und damit die spulenzugewandte Breite des Kompensationsmagneten selbst bzw. der Abstand zwischen dem ersten Antriebsmagneten und dem zweiten Antriebsmagneten auf der spulenzugewandten Seite darauf ausgelegt sein, eine möglichst große Kraftübertragung zwischen Stator und Läufer bei gleichzeitig möglichst geringen Rastmomenten zu erreichen.

Bei einer Magnetanordnung, bei der die dritte Querschnittsfläche des Kompensationsmagneten die erste und zweite Querschnittsfläche der Antriebsmagneten auf der spulenabgewandten Seite hinterschneidet, sind auf der spulenzugewandten Seite liegende Teile der Antriebsmagneten vor in Querrichtung zwischen der spulenzugewandten und der spulenabgewandten Seite liegenden Teilen des Kompensationsmagneten angeordnet. Die Querrichtung erstreckt sich dabei in der Schnittebene mit der ersten, zweiten und dritten Querschnittsfläche von der spulenzugewandten Seite in Richtung der spulenabgewandten Seite und ist senkrecht zur Bewegungsrichtung der Magnetanordnung, beispielsweise senkrecht zu einem Pfad, entlang dessen der Läufer des Motors beweglich ist, orientiert. Beispielsweise kann die Querrichtung parallel zu den Spulenachsen des elektrischen Motors orientiert sein.

Mit anderen Worten weist eine Magnetanordnung, bei der die dritte Querschnittsfläche des Kompensationsmagneten die erste und zweite Querschnittsfläche der Antriebsmagneten auf der spulenabgewandten Seite hinterschneidet, Schnittebenen auf, die senkrecht zu den spulenzugewandten Seiten der ersten und zweiten Querschnittsfläche orientiert sind, also beispielsweise die Spulenachsen eines linearen oder rotatorischen Motors umfassen, und die auf der spulenzugewandten Seite der Magnetanordnung die erste bzw. zweite Querschnittsfläche und zwischen der spulenzugewandten und der spulenabgewandten Seite die dritte Querschnittsfläche schneiden. Von der spulenzugewandten Seite in Richtung der spulenabgewandten Seite aus gesehen, beispielsweise in einer Richtung entlang der Spulenachsen, verdecken also auf der spulenzugewandten Seite Teile des ersten und des zweiten Antriebsmagneten hinter diesen Magneten liegende Teile des Kompensationsmagneten.

Bei einer Magnetanordnung, bei der der Kompensationsmagnet die Antriebsmagneten hinterschneidet, verstärkt das Magnetfeld des Kompensationsmagneten die Magnetfelder der Antriebsmagneten vorteilhafterweise nicht nur vor Randbereichen, in denen Antriebsmagnete und Kompensationsmagnet aneinandergrenzen, sondern auch in Bereichen vor der Mitte der Antriebsmagneten. Mittels einer derartigen Verstärkung auch in der Mitte der Antriebsmagnete und einer geeigneten Anpassung der spulenzugewandten Breiten von Antriebsmagneten und Kompensationsmagnet kann ein Magnetfeldverlauf im Bereich der Antriebsspulen realisiert werden, bei dem, abgesehen von Randeffekten an den Enden der Magnetanordnung, die Maxima und Minima der Magnetfeldkomponente parallel zu den Achsen der Antriebsspulen annährend den gleichen Betrag aufweisen und der Gesamtbetrag des erzeugten Magnetfeldes entlang der Antriebsspulen näherungsweise konstant ist.

Bei einer Weiterbildung der Magnetanordnung weist der erste Antriebsmagnet eine Magnetisierung auf, die von der spulenabgewandten Seite der Magnetanordnung in Richtung der spulenzugewandten Seite der Magnetanordnung orientiert ist, und der zweite Antriebsmagnet weist eine Magnetisierung auf, die von der spulenzugewandten Seite der Magnetanordnung in Richtung der spulenabgewandten Seite der Magnetanordnung orientiert ist. Der Kompensationsmagnet weist eine Magnetisierung auf, die von dem zweiten Antriebsmagneten in Richtung des ersten Antriebsmagneten orientiert ist.

Eine Magnetanordnung mit derart magnetisierten Antriebsmagneten und Kompensationsmagneten wird, wie bei einer Halbach-Anordnung, der magnetische Kreis zwischen dem ersten Antriebsmagneten und dem zweiten Antriebsmagneten durch den Kompensationsmagneten innerhalb der Magnetanordnung geschlossen. Außerdem verstärkt der Kompensationsmagnet das Magnetfeld des ersten und des zweiten Antriebsmagneten auf der spulenzugewandten Seite der Magnetanordnung und kompensiert es auf der spulenabgewandten Seite der Magnetanordnung.

Bei einer derart ausgebildeten Magnetanordnung ist der Betrag des Magnetfelds vorteilhafterweise auf der spulenzugewandten Seite in etwa 1,4-fach stärker als es der Betrag des Magnetfelds des ersten und des zweiten Antriebsmagneten ohne den Kompensationsmagneten wäre. Das stärkere Magnetfeld ermöglicht es, eine größere Kraft auf den Läufer des Motors auszuüben oder den Abstand zwischen Antriebsspulen und Antriebsmagneten bei gleicher Kraftübertragung zu vergrößern. Ein größerer Abstand zwischen den Antriebsspulen und den Antriebsmagneten vereinfacht vorteilhafterweise die Fertigung des Motors, beispielsweise können mechanische Führungen des Läufers mit größeren Fertigungstoleranzen hergestellt werden, es verringern sich die Anforderung an Toleranzen der mechanischen Führung im Betrieb, und Justagearbeiten bei der Montage des elektrischen Motors sind einfacher auszuführen.

Außerdem kann bei einer derartigen Magnetisierung der Magneten der Magnetanordnung vorteilhafterweise auf eine magnetische Rückschlussplatte auf der spulenabgewandten Seite der Magnetanordnung verzichtet werden. Dadurch kann bei einer Anbringung der Magnetanordnung am Läufer des elektrischen Motors der Läufer vorteilhaft leicht ausgeführt werden.

Bei einer Weiterbildung der Magnetanordnung ist eine spulenabgewandte Breite der ersten Querschnittsfläche kleiner als die spulenzugewandte Breite der ersten Querschnittsfläche und eine spulenabgewandte Breite der zweiten Querschnittsfläche ist kleiner als die spulenzugewandte Breite der zweiten Querschnittsfläche. Mit anderen Worten verjüngen sich die Querschnittsflächen der Antriebsmagnete von der spulenzugewandten Seite in Richtung der spulenabgewandten Seite. Dadurch können sich die Antriebsmagneten auch bei einer Magnetanordnung, bei welcher der Kompensationsmagnet die Antriebsmagneten hinterschneidet, von der spulenzugewandten Seite bis zur spulenabgewandten Seite der Magnetanordnung erstrecken, so dass die Antriebsmagneten eine vorteilhaft große Querschnittsfläche aufweisen und ein vorteilhaft starkes Magnetfeld erzeugen.

Bei einer Weiterbildung der Magnetanordnung entspricht die spulenabgewandte Breite der dritten Querschnittsfläche des Kompensationsmagneten der spulenzugewandten Breite der ersten Querschnittsfläche des ersten Antriebsmagneten und der spulenzugewandten Breite der zweiten Querschnittsfläche des zweiten Antriebsmagneten. Die spulenzugewandte Breite der dritten Querschnittsfläche des Kompensationsmagneten entspricht der spulenabgewandten Breite der ersten Querschnittsfläche des ersten Antriebsmagneten und der spulenabgewandten Breite der zweiten Querschnittsfläche des zweiten Antriebsmagneten. Dadurch können die Antriebsmagneten und der Kompensationsmagnet vorteilhafterweise symmetrisch ausgebildet werden, was die Anordnung der Magneten erleichtert.

Bei einer Weiterbildung der Magnetanordnung sind die erste Querschnittsfläche, die zweite Querschnittsfläche und die dritte Querschnittsfläche jeweils als ein Trapez, insbesondere als ein gleichschenkliges Trapez, ausgebildet. Dadurch lässt sich der Kompensationsmagnet auf einfache Weise an die Antriebsmagneten anschließend anordnen.

Bei einer Weiterbildung der Magnetanordnung erstrecken sich die erste Querschnittsfläche, die zweite Querschnittsfläche und die dritte Querschnittsfläche in einer Schnittebene durch die Magnetanordnung jeweils zwischen der spulenzugewandten Seite der Magnetanordnung und der spulenabgewandten Seite der Magnetanordnung. Dadurch können sowohl die Antriebsmagneten, als auch die Kompensationsmagneten eine vorteilhaft große Querschnittsfläche aufweisen, so dass sie jeweils ein vorteilhaft starkes Magnetfeld erzeugen.

Bei einer Weiterbildung der Magnetanordnung sind der Flächeninhalt der ersten Querschnittsfläche und der Flächeninhalt der zweiten Querschnittsfläche gleich groß.

Bei einer Weiterbildung der Magnetanordnung sind der Flächeninhalt der ersten Querschnittsfläche, der Flächeninhalt der zweiten Querschnittsfläche und der Flächeninhalt der dritten Querschnittsfläche gleich groß. Dadurch wird das magnetische Feld der Antriebsmagneten durch das Feld des Kompensationsmagneten auf der spulenabgewandten Seite im Wesentlichen vollständig kompensiert und auf der spulenzugewandten Seite der Magnetanordnung in vorteilhaft großem Maße und in vorteilhaft homogener Weise verstärkt. Insbesondere können das Magnetfeld der Magnetanordnung bei gleich großen Querschnittsflächen entlang der Antriebsspulen einen annährend konstanten Betrag und die Magnetfeldkomponente senkrecht zur Bewegungsrichtung der Magnetanordnung und entlang der Spulenachsen Maxima und Minima mit annährend gleichem Betrag aufweisen.

Gleiche Größe bedeutet in Bezug auf die Querschnittsflächen, dass auch Größenabweichungen zwischen den Querschnittsflächen der Antriebsmagneten und der Querschnittsfläche des Kompensationsmagneten um bis zu 20% mit umfasst sind.

Bei einer Weiterbildung der Magnetanordnung sind eine spulenzugewandte Seitenfläche des ersten Antriebsmagneten, eine spulenzugewandte Seitenfläche des zweiten Antriebsmagneten und eine spulenzugewandte Seitenfläche des Kompensationsmagneten rechteckig ausgebildet.

Bei einer Weiterbildung der Magnetanordnung sind der erste Antriebsmagnet, der zweite Antriebsmagnet und der Kompensationsmagnet aneinander anschließend angeordnet. Dies führt zu einer vorteilhaft hohen Verstärkung des magnetischen Feldes der Antriebsmagneten auf der spulenzugewandten Seite der Magnetanordnung durch den Kompensationsmagneten.

Bei einer Weiterbildung der Magnetanordnung ist die Magnetanordnung an einer Trägervorrichtung angeordnet, wobei die Trägervorrichtung aus einem unmagnetischen Material, insbesondere aus Aluminium, besteht. Das unmagnetische Material ist dabei im Wesentlichen frei von ferromagnetischen Bestandteilen und weist eine relative magnetische Permeabilität nahe eins auf. Die Trägervorrichtung kann beispielsweise eine separate Trägerplatte umfassen. Bei einer Anbringung der Magnetanordnung an dem Läufer des elektrischen Motors kann die Trägervorrichtung auch durch ein Gehäuse des Läufers oder den Läufer selbst, beispielsweise durch einen Läuferkörper, gebildet werden. Anstatt aus Aluminium kann die Trägervorrichtung auch aus einem anderen unmagnetischen Material, beispielsweise aus einem Kunststoff bestehen. In all diesen Fällen kann die Trägervorrichtung bzw. der Läufer ein vorteilhaft geringes Gewicht aufweisen.

Bei einer Weiterbildung der Magnetanordnung weist die Magnetanordnung eine Abdeckung auf, wobei die Abdeckung an der spulenzugewandten Seite der Magnetanordnung angeordnet ist. Dadurch können der erste und der zweite Antriebsmagnet, sowie der Kompensationsmagnet vorteilhafterweise vor äußeren mechanischen Einwirkungen und Verschmutzung geschützt werden.

Ein Läufer für einen elektrischen Motor umfasst eine Magnetanordnung zur Wechselwirkung mit Antriebsspulen des elektrischen Motors.

Ein elektrischer Motor umfasst einen Läufer, der eine Magnetanordnung zur Wechselwirkung mit Antriebsspulen eines elektrischen Motors umfasst, wobei die Antriebsspulen des elektrischen Motors über in einem Polabstand voneinander beabstandet angeordnete Polzähne mit der Magnetanordnung des Läufers wechselwirken und wobei der größte gemeinsame Teiler des Polabstandes und eines Magnetabstandes zwischen dem ersten Antriebsmagneten und dem zweiten Antriebsmagneten der Magnetanordnung gleich eins ist. Bei einem derartigen elektrischen Motor weisen zu keiner Zeit zwei oder mehr Antriebsmagneten die gleiche relative Lage gegenüber den Antriebsspulen auf, wodurch bei einer Bewegung des Läufers gegenüber den Polzähnen der Antriebsspulen lediglich vorteilhaft geringe Rastmomente auftreten.

Bei einer Weiterbildung des elektrischen Motors weist die Magnetanordnung eine Anzahl M von Antriebsmagneten auf, die jeweils in dem Magnetabstand voneinander beabstandet angeordnet sind. Dabei entspricht das M-fache des Magnetabstandes einem ganzzahligen Vielfachen des Polabstandes. Bei einer derartigen Ausführung eines elektrischen Motors kann auf vorteilhaft einfache Weise eine große Kraft auf den Läufer des Motors ausgeübt werden, ohne dass zwei oder mehr Antriebsmagneten die gleiche relative Lage gegenüber den Antriebsspulen aufweisen und dadurch hohe Rastmomente auftreten würden.

Die Erfindung wird im Folgenden anhand von Figuren näher erläutert. Dabei zeigen in jeweils schematischer Darstellung:
- Fig. 1: eine frontale Schnittansicht eines elektrischen Motors mit einem Stator und einem Läufer mit einer Magnetanordnung;
- Fig. 2: eine perspektivische Ansicht des Stators des elektrischen Motors;
- Fig. 3: eine in einer Schnittebene geschnittene Aufsicht auf die Magnetanordnung des Läufers des elektrischen Motors;
- Fig. 4: eine perspektivische Ansicht der Magnetanordnung des Läufers des elektrischen Motors;
- Fig. 5: eine in der Schnittebene geschnittene Aufsicht auf den Läufer und den Stator des elektrischen Motors;
- Fig. 6: eine perspektivische Ansicht einer ersten alternativen Magnetanordnung für den Läufer des elektrischen Motors;
- Fig. 7: eine in der Schnittebene geschnittene Aufsicht auf eine zweite alternative Magnetanordnung für den Läufer des elektrischen Motors;
- Fig. 8: eine in der Schnittebene geschnittene Aufsicht auf eine dritte alternative Magnetanordnung für den Läufer des elektrischen Motors; und
- Fig. 9: eine in der Schnittebene geschnittene Aufsicht auf eine vierte alternative Magnetanordnung für den Läufer des elektrischen Motors.

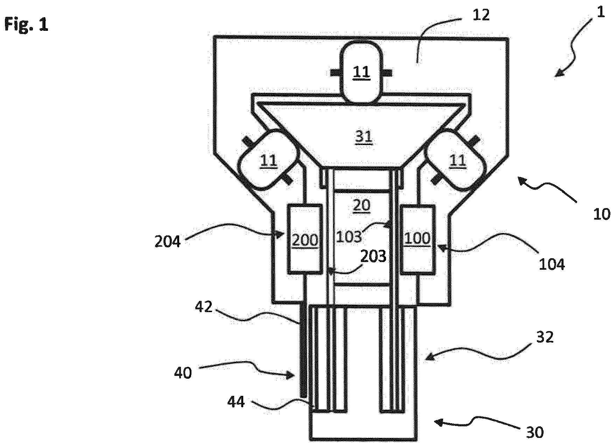

**Figur 1** zeigt eine frontale Schnittansicht eines elektrischen Motors 1. Der elektrische Motor 1 ist als linearer Synchronmotor ausgebildet und umfasst einen Stator 30 und einen entlang des Stators 30 beweglichen Läufer 10. Der Läufer 10 ist senkrecht zur Schnittebene der in Figur 1 dargestellten Ansicht entlang des Stators 30 beweglich. Der Stator 30 umfasst eine Laufschiene 31 und ein Statorgehäuse 32. Der Läufer 10 umfasst einen U-förmigen Läuferkörper 12, sowie drei Laufrollen 11. Die Laufrollen 11 liegen an der Laufschiene 31 des Stators 30 an, so dass der Läufer 10 über die Laufrollen 11 und die Laufschiene 31 entlang des Stators 30 geführt wird.

Der elektrische Motor 1 umfasst ein Positionserfassungssystem 40, welches als ein induktives Positionserfassungssystem ausgebildet ist. Das Positionserfassungssystem 40 umfasst eine an dem Läufer 10 angeordnete Geberfahne 42 und eine an dem Stator 30 angeordnete Empfängerplatine 44. Die Geberfahne 42 und die Empfängerplatine 44 sind einander gegenüberliegend angeordnet. Bei einer Bewegung des Läufers 10 entlang des Stators 30 wird die Geberfahne 42 in konstantem Abstand entlang der Empfängerplatine 44 bewegt. Die Empfängerplatine 44 erfasst die relative Lageänderung der Geberfahne 42 und übermittelt ein entsprechendes Signal an ein übergeordnetes Steuerungssystem des elektrischen Motors 1.

Zum Antrieb des Läufers 10 umfasst der Stator 30 des elektrischen Motors 1 mehrere entlang des Stators 30 angeordnete Antriebsspulen 20. In der in Figur 1 dargestellten Schnittansicht ist lediglich eine der Antriebsspulen 20 sichtbar, weitere Antriebsspulen 20 sind vor bzw. hinter der dargestellten Antriebsspule 20 angeordnet. Den Antriebsspulen 20 gegenüberliegend sind an dem Läufer 10 eine Magnetanordnung 100, sowie eine weitere Magnetanordnung 200 angeordnet. Die Magnetanordnung 100 und die weitere Magnetanordnung 200 bilden das Erregersystem des elektrischen Motors 1. Sie umfassen mehrere Antriebsmagneten, welche mit einem von den Antriebsspulen 20 erzeugten Magnetfeld wechselwirken. Analog zu den Antriebsspulen ist in Figur 1 jeweils einer der Antriebsmagneten der Magnetanordnungen 100, 200 dargestellt und die restlichen Antriebsmagneten befinden sich hinter, bzw. vor dem dargestellten Antriebsmagneten.

Der Magnetanordnung 100 liegen auf einer spulenzugewandten Seite 103 der Magnetanordnung 100 die Antriebsspulen 20 des elektrischen Motors 1 gegenüber. Auf einer spulenabgewandten Seite 104 ist die Magnetanordnung 100 an dem Läuferkörper 12 des Läufers 10 befestigt. Analog liegen der weiteren Magnetanordnung 200 die Antriebsspulen 20 auf einer spulenzugewandten Seite 203 der weiteren Magnetanordnung 200 gegenüber, während die weitere Magnetanordnung 200 auf einer spulenabgewandten Seite 204 der weiteren Magnetanordnung 200 an dem Läuferkörper 12 befestigt ist.

Um den Läufer 10 entlang des Stators 30 zu bewegen, wird von den Antriebsspulen 20 des Stators 30 ein magnetisches Wechselfeld erzeugt, welches entlang des Stators propagiert wird. Das von den Antriebsspulen 20 erzeugte Magnetfeld kann daher auch als ein magnetisches Wanderfeld bezeichnet werden. Die Periodizität der Antriebsmagnete und des magnetischen Wechselfeldes sind derart aufeinander abgestimmt, dass bei der Propagation des Wechselfeldes entlang des Stators 30 die Magnetanordnungen 100, 200, und damit auch der Läufer 10, mit dem Wechselfeld mitbewegt wird.

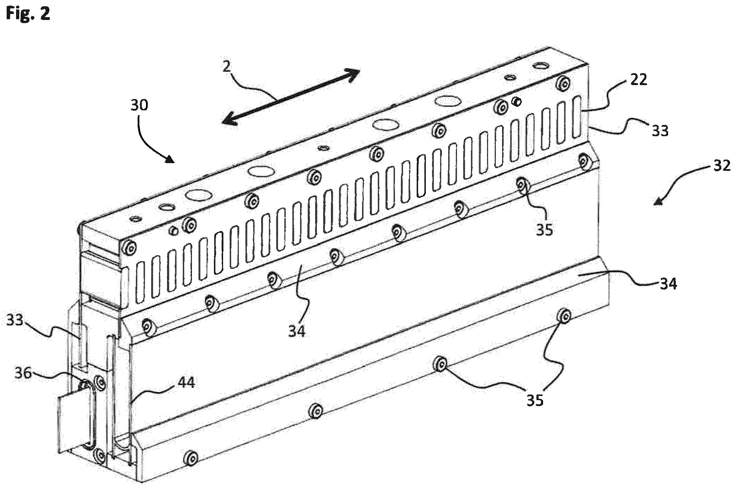

**Figur 2** zeigt eine perspektivische Ansicht des Stators 30 des elektrischen Motors 1. Ein Pfad 2, entlang welchem der hier nicht dargestellte Läufer 10 des elektrischen Motors 1 verfahrbar ist, ist durch einen Doppelpfeil angedeutet. Der Stator 30 kann mehrere entlang des Pfades 2 aneinander anschließend angeordnete Statormodule umfassen. In Figur 2 ist ein einzelnes dieser Statormodule dargestellt. Nicht dargestellt ist in Figur 2 die auf den Modulen angeordnete Laufschiene 31.

Der Stator 30 umfasst eine Mehrzahl von Polzähnen 22, welche innerhalb des Stators 30 voneinander beabstandet entlang des Pfades 2 angeordnet sind. Die Polzähne 22 sind im Wesentlichen stabförmig ausgebildet und quer zu dem Pfad 2 orientiert. Sie sind an ihren beiden endseitigen Stirnflächen jeweils in einer Aussparung einer Leiterplatte 33 angeordnet. Die Leiterplatten 33 bilden jeweils eine Außenwand des Statorgehäuses 32. Dadurch liegen die Stirnflächen der Polzähne 22 jeweils an Außenflächen des Statorgehäuses 32 frei.

Neben den Leiterplatten 33 bildet die Empfängerplatine 44 des Positionserfassungssystems 40 ebenfalls eine Außenwand des Statorgehäuses 32. Die Leiterplatten 33 und die Empfängerplatine 44 werden durch mehrere Befestigungsschienen 34 und Schrauben 35 miteinander verbunden. An einer Stirnseite weist das in Figur 2 dargestellte Statormodul des Stators 30 ein Verbindungselement 36 auf. Über das Verbindungselement 36 kann das Statormodul mit einem an der Stirnseite anschließend angeordneten weiteren Statormodul elektrisch leitend verbunden werden.

Die Polzähne 22 weisen jeweils Mittenachsen auf, die von einer der endseitigen Stirnfläche in Richtung der anderen endseitigen Stirnfläche ausgerichtet sind. Damit sind die Mittenachsen der Polzähne 22 quer zu dem Pfad 2 und senkrecht zu den die Außenwände des Stators 30 bildenden Leiterplatten 33 ausgerichtet. Jeder zweite der Polzähne 22 ist mit einer Spulenwicklung der Antriebsspulen 20 umwickelt. Die umwickelten Polzähne 22 bilden damit jeweils einen Spulenzahn des elektrischen Motors 1 und die Mittenachsen der umwickelten Polzähne 22 jeweils eine Spulenachse aus. Die Polzähne 22 verstärken und bündeln das durch die Antriebsspulen 20 erzeugte Magnetfeld und leiten es an ihren endseitigen Stirnflächen jeweils nach außen. Die Polzähne 22 bestehen aus einem Material mit einer großen magnetischen Permeabilität und einer niedrigen Koerzitivfeldstärke. Die Polzähne 22 können beispielsweise aus Weicheisen bestehen.

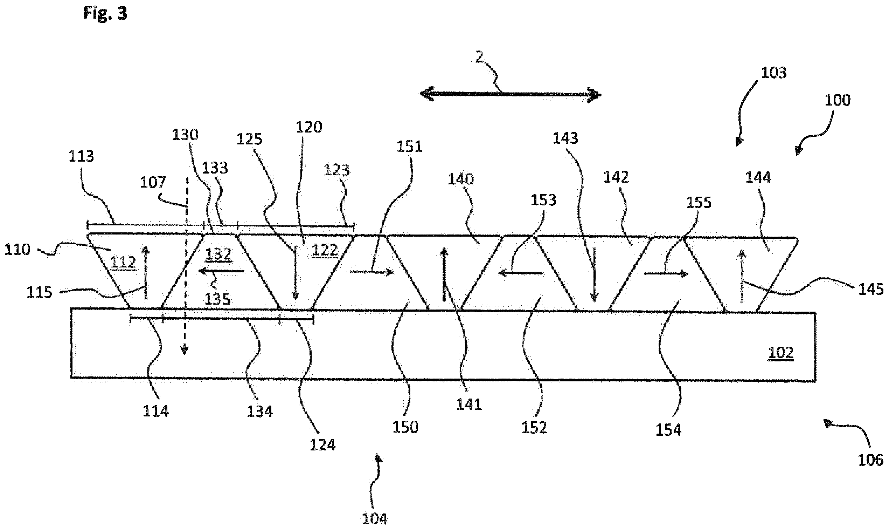

**Figur 3** zeigt in schematischer Darstellung eine geschnittene Aufsicht auf die Magnetanordnung 100 des in Figur 1 gezeigten Läufers 10 des elektrischen Motors 1. Die in Figur 3 dargestellte Schnittansicht zeigt die Magnetanordnung 100 in einer Schnittebene 106, welche parallel zu dem Pfad 2 orientiert ist und in der die Spulenachsen bzw. die Mittenachsen der Spulenzähne der Antriebsspulen 20 des elektrischen Motors 1 liegen.

Die Magnetanordnung 100 weist einen ersten Antriebsmagneten 110, einen zweiten Antriebsmagneten 120, sowie einen Kompensationsmagneten 130 auf. Der erste Antriebsmagnet 110, der Kompensationsmagnet 130 und der zweite Antriebsmagnet 120 sind nebeneinander und aneinander anschließend entlang des Pfades 2 angeordnet. Dabei ist der Kompensationsmagnet 130 entlang des Pfades 2 zwischen dem ersten Antriebsmagneten 110 und dem zweiten Antriebsmagneten 120 angeordnet. Zusätzlich umfasst die Magnetanordnung 100 einen entlang des Pfades 2 an den zweiten Antriebsmagneten 120 anschließend angeordneten ersten weiteren Kompensationsmagneten 150. An dem ersten weiteren Kompensationsmagneten 150 schließt entlang des Pfades 2 ein erster weiterer Antriebsmagnet 140, gefolgt von einem zweiten weiteren Kompensationsmagneten 152, gefolgt von einem zweiten weiteren Antriebsmagneten 142, gefolgt von einem dritten weiteren Kompensationsmagneten 154 und schließlich gefolgt von einem dritten weiteren Antriebsmagneten 144 an.

In der Schnittebene 106 weist der erste Antriebsmagnet 110 eine erste Querschnittsfläche 112, der zweite Antriebsmagnet eine zweite Querschnittsfläche 122 und der Kompensationsmagnet 130 eine dritte Querschnittsfläche 132 auf. Die erste, zweite und dritte Querschnittsfläche 112, 122, 132 sind jeweils zwischen der spulenzugewandten Seite 103 und der spulenabgewandten Seite 104 der Magnetanordnung 100 angeordnet. Bei der Magnetanordnung 100 erstrecken sich die erste, zweite und dritte Querschnittsfläche 112, 122, 132 zwischen der spulenzugewandten Seite 103 und der spulenabgewandten Seite 104 der Magnetanordnung 100, das heißt, die erste, zweite und dritte Querschnittsfläche 112, 122, 132 weist jeweils je eine Seite oder Kante auf, die einen Teil der spulenzugewandten Seite 103 bildet, und je eine Seite oder Kante, die einen Teil der spulenabgewandten Seite 104 der Magnetanordnung 100 bildet.

Bei alternativen Ausführungsformen kann die erste, zweite oder dritte Querschnittsfläche 112, 122, 132 aber auch derart zwischen der spulenzugewandten Seite 103 und der spulenabgewandten Seite 104 angeordnet sein, dass sie sich nicht vollständig bis zur spulenabgewandten und/oder spulenzugewandten Seite 104, 103 erstreckt.

Die erste Querschnittsfläche 112, die zweite Querschnittsfläche 122 und die dritte Querschnittsfläche 132 sind jeweils als ein gleichschenkliges Trapez ausgebildet. Die erste Querschnittsfläche 112, die zweite Querschnittsfläche 122 und die dritte Querschnittsfläche 132 weisen jeweils die gleichen Abmessungen auf. Insbesondere ist der Flächeninhalt der ersten Querschnittsfläche 112, der zweiten Querschnittsfläche 122 und der dritten Querschnittsfläche 132 jeweils gleich groß.

Die Grundseiten der trapezförmig ausgebildeten ersten Querschnittsfläche 112, zweiten Querschnittsfläche 122 und dritten Querschnittsfläche 132 liegen jeweils auf der spulenzugewandten Seite 103 und der spulenabgewandten Seite 104 der Magnetanordnung 100, so dass sich die erste, zweite und dritte Querschnittsfläche 112, 122, 132 zwischen der spulenzugewandten Seite 103 und der spulenabgewandten Seite 104 der Magnetanordnung 100 erstreckt. Die Grundseiten der Querschnittsfläche 112, 122, 132 sind jeweils parallel zu dem Pfad 2 orientiert.

Die erste Querschnittsfläche 112 weist an der auf der spulenzugewandten Seite 103 gelegenen Grundseite eine spulenzugewandte Breite 113 auf, welche größer ist als eine spulenabgewandte Breite 114 der ersten Querschnittsfläche 112 an der auf der spulenabgewandten Seite 104 liegenden Grundseite. Die zweite Querschnittsfläche 122 des zweiten Antriebsmagneten 120 ist orientiert und ausgebildet wie die erste Querschnittsfläche 112 des ersten Antriebsmagneten 110. Insbesondere weist die zweite Querschnittsfläche 122 auf der spulenzugewandten Seite 103 eine spulenzugewandte Breite 123 auf, die größer ist als eine spulenabgewandte Breite 124 der zweiten Querschnittsfläche 122. Die Querschnittsflächen 112, 122 der Antriebsmagnete 110, 120 verjüngen sich also von der spulenzugewandten Seite 103 in Richtung der spulenabgewandten Seite 104 der Magnetanordnung 100.

Eine spulenzugewandte Breite 133 der dritten Querschnittsfläche 132 auf der spulenzugewandten Seite 103 ist kleiner als eine spulenabgewandte Breite 134 der dritten Querschnittsfläche 132 auf der spulenabgewandten Seite 104. Die dritte Querschnittsfläche 132 verbreitert sich also von der spulenzugewandten Seite 103 in Richtung der spulenabgewandten Seite 104. Bei der Magnetanordnung 100 weist die dritte Querschnittsfläche 132 des Kompensationsmagneten 130 die gleiche Form und die gleichen Abmessungen auf wie die erste Querschnittsfläche 112 und die zweite Querschnittsfläche 122, ist aber gegenüber diesen um 180 Grad gedreht angeordnet. Die spulenzugewandte Breite 133 der dritten Querschnittsfläche 132 entspricht den spulenabgewandten Breiten 114, 124 der ersten und zweiten Querschnittsfläche 112, 122. Außerdem entspricht die spulenzugewandte Breite 113 der ersten Querschnittsfläche 112 und die spulenzugewandte Breite 123 der zweiten Querschnittsfläche 122 der spulenabgewandten Breite 134 der dritten Querschnittsfläche 132.

Die dritte Querschnittsfläche 132 hinterschneidet jeweils die erste und die zweite Querschnittsfläche 112, 122 auf der spulenabgewandten Seite 104. Folglich sind in einer Querrichtung 107, welche in der Schnittebene 106 senkrecht zu dem Pfad 2 bzw. zu der spulenabgewandten und spulenzugewandten Seite 103, 104 der Magnetanordnung 100 orientiert ist, in Richtung der spulenzugewandten Seite 103 gelegene Teile der ersten und zweiten Querschnittsfläche 112, 122 vor in Richtung der spulenabgewandten Seite 104 gelegenen Teilen der dritten Querschnittsfläche 132 angeordnet. Bei der Magnetanordnung 100 liegen an die spulenzugewandte Seite 103 angrenzende Teile der ersten und zweiten Querschnittsfläche 112, 122 in der Querrichtung 107 vor an die spulenabgewandte Seite 104 angrenzende Teile der dritten Querschnittsfläche 132. Konkret liegen Teile der auf der spulenzugewandten Seite 103 angeordneten Grundseiten der trapezförmigen ersten und zweiten Querschnittsflächen 112, 122 in der Querrichtung 107 vor Teilen der auf der spulenabgewandten Seite 104 angeordneten Grundseiten der trapezförmigen dritten Querschnittsfläche 132.

Eine Anordnung, bei der die dritte Querschnittsfläche 132 des Kompensationsmagneten 130 die erste und zweite Querschnittsfläche 112, 122 des ersten und zweiten Antriebsmagneten 110, 120 hinterschneidet, wird bei der ersten Magnetanordnung 100 dadurch erreicht, dass sich die erste und die zweite Querschnittsfläche 112, 122 von der spulenzugewandten Seite 103 in Richtung der spulenabgewandten Seite 104 verjüngen und sich die dritte Querschnittsfläche 132 von der spulenzugewandten Seite 103 in Richtung der spulenabgewandten Seite 104 verbreitert.

Der erste Antriebsmagnet 110 weist eine Magnetisierung 115 auf, welche parallel zu der Schnittebene 106 und senkrecht zu dem Pfad 2 orientiert und von der spulenabgewandten Seite 104 der Magnetanordnung 100 in Richtung der spulenzugewandten Seite 103 der Magnetanordnung 100 gerichtet ist. Der zweite Antriebsmagnet 120 weist eine Magnetisierung 125 auf, welche ebenfalls parallel zu der Schnittebene 106 und senkrecht zu dem Pfad 2 orientiert und der Magnetisierung 115 des ersten Antriebsmagneten 110 entgegengerichtet ist. Folglich ist die Magnetisierung 125 des zweiten Antriebsmagneten 120 von der spulenzugewandten Seite 103 der Magnetanordnung 100 in Richtung der spulenabgewandten Seite 104 der Magnetanordnung 100 ausgerichtet.

Der Kompensationsmagnet 130 weist eine Magnetisierung 135 auf, welche parallel zu der Schnittebene 106 und parallel zu dem Pfad 2 orientiert ist und von dem zweiten Antriebsmagneten 120 in Richtung des ersten Antriebsmagneten 110 gerichtet ist. Dadurch ist die Magnetisierung 135 des Kompensationsmagneten 130 von einem Antriebsmagneten, der in Richtung der spulenabgewandten Seite 104 magnetisiert ist, zu einem Antriebsmagneten gerichtet, der in Richtung der spulenzugewandten Seite 103 magnetisiert ist.

Die Magnetisierung 135 des Kompensationsmagneten 130 ist damit so ausgerichtet, dass das von dem ersten Antriebsmagneten 110 und dem zweiten Antriebsmagneten 120 auf der spulenzugewandten Seite 103 der Magnetanordnung 100 erzeugte Magnetfeld, welches von dem ersten Antriebsmagneten 110 in Richtung des zweiten Antriebsmagneten 120 gerichtet ist, durch das von dem Kompensationsmagneten 130 erzeugte Magnetfeld verstärkt wird. Analog dazu wird das von dem ersten Antriebsmagneten 110 und dem zweiten Antriebsmagneten 120 auf der spulenabgewandten Seite 104 der Magnetanordnung 100 erzeugte Magnetfeld, welches von dem zweiten Antriebsmagneten 120 in Richtung des ersten Antriebsmagneten 110 orientiert ist, durch das Magnetfeld des Kompensationsmagneten 130 abgeschwächt bzw. kompensiert.

Bei der Magnetanordnung 100 sind die Abmessungen der Antriebsmagnete 110, 120 und des Kompensationsmagneten 130 derart gewählt, dass bei einer Wechselwirkung der Magneten der Magnetanordnung 100 mit den Antriebsspulen 20 des elektrischen Motors 1 zum einen eine möglichst hohe Kraftübertragung auf den die Magnetanordnung 100 aufweisenden Läufer 10 erfolgt, zum anderen nur geringe Rastmomente bei einer Bewegung des Läufers 10 entlang des Stators 30 auftreten.

Die Größe der Rastmomente, die bei einer Bewegung des Läufers 10 mit der Magnetanordnung 100 relativ zu den Polzähnen 22 des Stators 30 auftreten, wird maßgeblich durch das Verhältnis zwischen den spulenzugewandten Breiten 113, 123 der ersten und zweiten Querschnittsfläche 112, 122 und der spulenzugewandten Breite 133 der dritten Querschnittsfläche 132 bzw. dem Abstand zwischen der ersten und zweiten Querschnittsfläche 112, 122 auf der spulenzugewandten Seite 103 beeinflusst. Bei der Magnetanordnung 100 ist dieses Verhältnis derart ausgelegt, dass Rastmomente minimiert werden. Insbesondere ist die spulenzugewandte Breite 113, 123 der ersten und der zweiten Querschnittsfläche 112, 122 der Antriebsmagneten 110, 120 größer als der Abstand zwischen dem ersten und dem zweiten Antriebsmagneten 110, 120, wobei dieser Abstand der spulenzugewandten Breite 133 der dritten Querschnittsfläche 132 des Kompensationsmagneten 130 entspricht.

Das Verhältnis zwischen den spulenabgewandten Breiten 114, 124 der ersten und zweiten Querschnittsfläche 112, 122 und der spulenabgewandten Breite 134 der dritten Querschnittsfläche 132 bestimmt in erster Linie die Verstärkung der Magnetfelder der Antriebsmagneten 110, 120 durch das Magnetfeld des Kompensationsmagneten 130 auf der spulenzugewandten Seite 103. Bei der Magnetanordnung 100 sind die spulenabgewandten Breiten 114, 124 der ersten und zweiten Querschnittsfläche 112, 122 kleiner als die spulenabgewandte Breite 134 der dritten Querschnittsfläche 132. Eine Verstärkung des Magnetfeldes der Antriebsmagneten 110, 120 kann bei alternativen Ausführungsformen der Magnetanordnung 100 auch erreicht werden, wenn die spulenabgewandten Breiten 114, 124 der ersten und zweiten Querschnittsfläche 112, 122 der Antriebsmagnete 110, 120 größer sind als die spulenabgewandte Breite 134 der dritten Querschnittsfläche 132 des Kompensationsmagneten 130.

Der erste weitere Antriebsmagnet 140 und der dritte weitere Antriebsmagnet 144 sind ausgebildet und magnetisiert wie der erste Antriebsmagnet 110. Insbesondere weisen der erste weitere Antriebsmagnet 140 eine Magnetisierung 141 und der dritte weitere Antriebsmagnet 144 eine Magnetisierung 145 auf, welche jeweils von der spulenabgewandten Seite 104 in Richtung der spulenzugewandten Seite 103 der Magnetanordnung 100 orientiert ist. Der zweite weitere Antriebsmagnet 142 ist ausgebildet wie der zweite Antriebsmagnet 120, weist also insbesondere eine Magnetisierung 143 auf, welche von der spulenzugewandten Seite 103 der Magnetanordnung in Richtung der spulenabgewandten Seite 104 orientiert ist.

Der erste weitere Antriebsmagnet 140, der zweite weitere Antriebsmagnet 142 und der dritte weitere Antriebsmagnet 144 weisen jeweils die gleichen Abmessungen auf wie der erste Antriebsmagnet 110, der zweite Antriebsmagnet 120 und Kompensationsmagnet 130. Insbesondere weisen der erste weitere Antriebsmagnet 140, der zweite weitere Antriebsmagnet 142 und der dritte weitere Antriebsmagnet 144 jeweils auf der spulenzugewandten Seite 103 eine größere Breite auf als auf der spulenabgewandten Seite 104. Bei der ersten Magnetanordnung 100 sind die weiteren Antriebsmagnete 140, 142, 144, wie die Antriebsmagneten 110, 120, jeweils als gleichschenklige Trapeze ausgebildet.

Soweit keine Unterschiede beschrieben werden, sind der erste weitere Kompensationsmagnet 150, der zweite weitere Kompensationsmagnete 152 und der dritte weitere Kompensationsmagneten 154 ausgebildet wie der Kompensationsmagnet 130. Insbesondere entsprechen Formen und Abmessungen des ersten weiteren Kompensationsmagneten 150, des zweiten weiteren Kompensationsmagneten 152 und des dritten weiteren Kompensationsmagneten 154 jeweils Form und Abmessung des Kompensationsmagneten 130, die weiteren Kompensationsmagneten 150, 152, 154 weisen also auf der spulenzugewandten Seite 103 jeweils eine kleinere Breite auf als auf der spulenabgewandten Seite 104 und diese Breiten entsprechen jeweils den entsprechenden Breiten des Kompensationsmagneten 130. Bei der Magnetanordnung 100 sind die weiteren Kompensationsmagnete 150, 152, 154, wie der Kompensationsmagnet 130, trapezförmig ausgebildet.

Der zwischen dem zweiten Antriebsmagneten 120 und dem ersten weiteren Antriebsmagneten 140 angeordnete erste weitere Kompensationsmagnet 150 weist eine Magnetisierung 151 auf, welche von dem zweiten Antriebsmagneten 120 in Richtung des ersten weiteren Antriebsmagneten 140 orientiert und parallel zu dem Pfad 2 ausgerichtet ist. Der zwischen dem ersten weiteren Antriebsmagneten 140 und dem zweiten weiteren Antriebsmagneten 142 angeordnete zweite weitere Kompensationsmagnet 152 weist eine Magnetisierung 153 auf, welche von dem zweiten weiteren Antriebsmagneten 142 in Richtung des ersten weiteren Antriebsmagneten 140 gerichtet und parallel zu dem Pfad 2 orientiert ist. Der zwischen dem zweiten weiteren Antriebsmagneten 142 und dem dritten weiteren Antriebsmagneten 144 angeordnete dritte weitere Kompensationsmagnet 154 weist eine Magnetisierung 155 auf, die parallel zu dem Pfad 2 und von dem zweiten weiteren Antriebsmagneten 142 in Richtung des dritten weiteren Antriebsmagneten 144 orientiert ist.

Die Magnetisierung 115, 125, 141, 143, 145 der Antriebsmagneten 110, 120, 140, 142, 144 der Magnetanordnung 100 ist damit jeweils abwechselnd in Richtung der spulenzugewandten Seite 103 und der spulenabgewandten Seite 104 orientiert. Dadurch erzeugen die Antriebsmagneten 110, 120, 140, 142, 144 auf der spulenzugewandten Seite 103 ein räumlich alternierendes magnetisches Wechselfeld zur Wechselwirkung mit den Antriebsspulen 20 des elektrischen Motors 1.

Nach Art einer Halbach-Magnetanordnung sind die Kompensationsmagneten 130, 150, 152, 154 jeweils derart magnetisiert, dass ihre Magnetisierung von einem Antriebsmagneten, der in Richtung der spulenabgewandten Seite 104 magnetisiert ist, in Richtung eines Antriebsmagneten gerichtet ist, der in Richtung der spulenzugewandten Seite 103 magnetisiert ist. Damit wird durch die Kompensationsmagneten 130, 150, 152, 154 das Magnetfeld, welches von den Antriebsmagneten 110, 120, 140, 142, 144 erzeugt wird, auf der spulenzugewandten Seite 103 jeweils verstärkt und auf der spulenabgewandten Seite 104 jeweils abgeschwächt bzw. kompensiert.

Die Grundseiten der trapezförmigen Querschnittsflächen der Antriebsmagnete 110, 120, 140, 142, 144 und der Kompensationsmagnete 130, 150, 151, 152, 154 sind auf der spulenzugewandten Seite 103 und der spulenabgewandten Seite 104 jeweils fluchtend miteinander ausgerichtet. Insbesondere sind die Grundseiten der ersten Querschnittsfläche 112, der zweiten Querschnittsfläche 122 und der dritten Querschnittsfläche 132 auf der spulenzugewandten Seite 103 und der spulenabgewandten Seite 104 jeweils fluchtend miteinander ausgerichtet. Dadurch ergeben sich auf der spulenzugewandten Seite 103 und auf der spulenabgewandten Seite 104 jeweils gerade Seiten bzw. Kanten der Magnetanordnung 100.

Die Magnetanordnung 100 ist auf ihrer spulenabgewandten Seite 104 auf einer Trägervorrichtung 102 angeordnet. Die Trägervorrichtung 102 weist in der Schnittebene 106 auf ihrer der spulenabgewandten Seite 104 der Magnetanordnung 100 zugewandten Seite eine im Wesentlichen ebene Seitenfläche auf. Die Trägervorrichtung 102 besteht aus einem unmagnetischen Material oder weist ein solches unmagnetische Material auf. Das unmagnetische Material ist im Wesentlichen frei von ferromagnetischen Bestandteilen und weist eine relative magnetische Permeabilität nahe eins auf. Damit werden in dem unmagnetischen Material keine Feldlinien des von den Magneten der Magnetanordnung 100 erzeugten Magnetfeldes konzentriert. Insbesondere fungiert die Trägervorrichtung 102 damit nicht als Rückschlussplatte für die Magnetanordnung 100. Die Trägervorrichtung 102 kann beispielsweise aus Aluminium oder aus einem Kunststoff bestehen.

Anstatt an der Trägervorrichtung 102 kann die Magnetanordnung 100 auch direkt an dem Läufer 10, bspw. an dem Läuferkörper 12 angeordnet sein. Wie die Trägervorrichtung 102 kann der Läuferkörper 12 aus einem unmagnetischen Material, beispielsweise aus Aluminium, bestehen, so dass der Läuferkörper 12 auch nicht als Rückschlussplatte für die Magnetanordnung 100 fungiert.

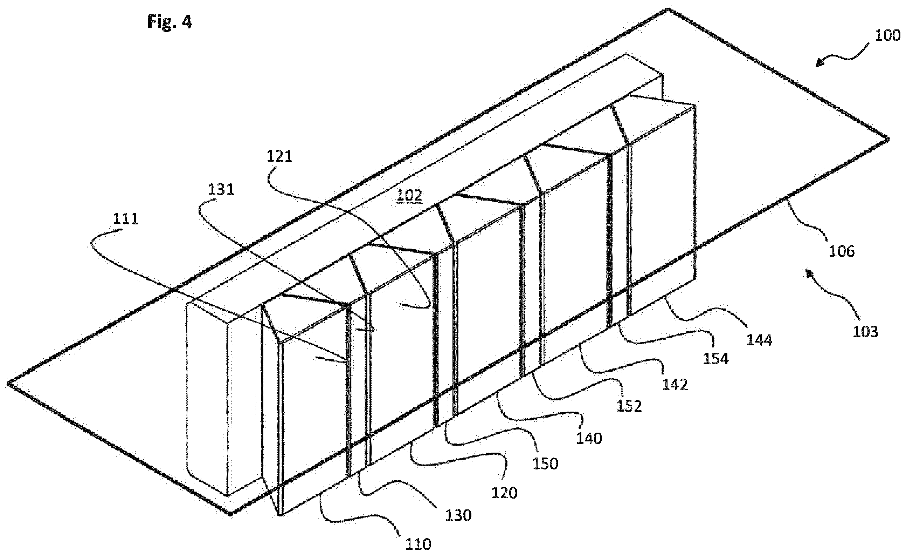

**Figur 4** zeigt eine schematische Darstellung einer perspektivischen Ansicht der Magnetanordnung 100 des in Figur 1 gezeigten Läufers 10 des elektrischen Motors 1 mit der Trägervorrichtung 102. Die Antriebsmagneten 110, 120, 140, 142, 144 und die Kompensationsmagneten 130, 150, 152, 154 sind jeweils als gerade Zylinder ausgebildet. Die zylinderförmigen Antriebsmagneten 110, 120, 140, 142, 144 und Kompensationsmagneten 130, 150, 152, 154 weisen jeweils Grundflächen auf, die jeweils den in Figur 3 dargestellten Querschnittsflächen in der Schnittebene 106 entsprechen. Insbesondere entsprechen die Grundflächen des ersten Antriebsmagneten 110, des zweiten Antriebsmagneten 120 und des Kompensationsmagneten 130 jeweils der ersten Querschnittfläche 112, der zweiten Querschnittsfläche 122 bzw. der dritten Querschnittsfläche 132.

Nachdem die Antriebsmagneten 110, 120, 140, 142, 144 und die Kompensationsmagneten 130, 150, 152, 154 der Magnetanordnung 100 als Zylinder ausgebildet sind, entspricht der Querschnitt der Antriebsmagneten 110, 120, 140, 142, 144 und die Kompensationsmagneten 130, 150, 152, 154 der Magnetanordnung 100 in jeder zu der Schnittebene 106 parallelen Schnittebene den Darstellungen der Figur 3. Insbesondere weisen die Antriebsmagneten 110, 120, 140, 142, 144 und die Kompensationsmagneten 130, 150, 152, 154 der Magnetanordnung 100 in jeder dieser Schnittebenen Querschnittsflächen auf, welche ausgebildet sind wie die erste Querschnittsfläche 112, die zweite Querschnittsfläche 122 bzw. die dritte Querschnittsfläche 132.

Auf der spulenzugewandten Seite 103 weist der erste Antriebsmagnet 110 eine spulenzugewandte Seitenfläche 111, der zweite Antriebsmagnet 120 eine spulenzugewandte Seitenfläche 121 und der Kompensationsmagnet 130 eine spulenzugewandte Seitenfläche 131 auf. Die spulenzugewandten Seitenflächen 111, 121, 131 sind jeweils rechteckig. Die Breite der spulenzugewandten Seitenfläche 111 des ersten Antriebsmagneten 110 entlang des Pfades 2 entspricht der spulenzugewandten Breite 113 der ersten Querschnittfläche 112, analog entsprechen die Breiten der spulenzugewandten Seitenflächen 121, 131 des zweiten Antriebsmagneten 120 und des Kompensationsmagneten 130 entlang des Pfades 2 der spulenzugewandten Breite 123 der zweiten Querschnittsfläche 122 bzw. der spulenzugewandten Breite 133 der dritten Querschnittsfläche 132. Senkrecht zur Schnittebene 106 kann die Höhe der Seitenflächen 111, 121, 131 und damit die Höhe der Magneten 110, 120, 130 beispielsweise der Höhe der an dem Statorgehäuse 32 freiliegenden Stirnflächen der Polzähne 22 entsprechen.

Die weiteren Antriebsmagneten 140, 142, 144 und die weiteren Kompensationsmagneten 150, 152, 154 weisen auf der spulenzugewandten Seite 103 jeweils Seitenflächen auf, die ausgebildet sind wie die Seitenflächen 111, 121 der Antriebsmagnete 110, 120 bzw. die Seitenfläche 131 des Kompensationsmagneten 130.

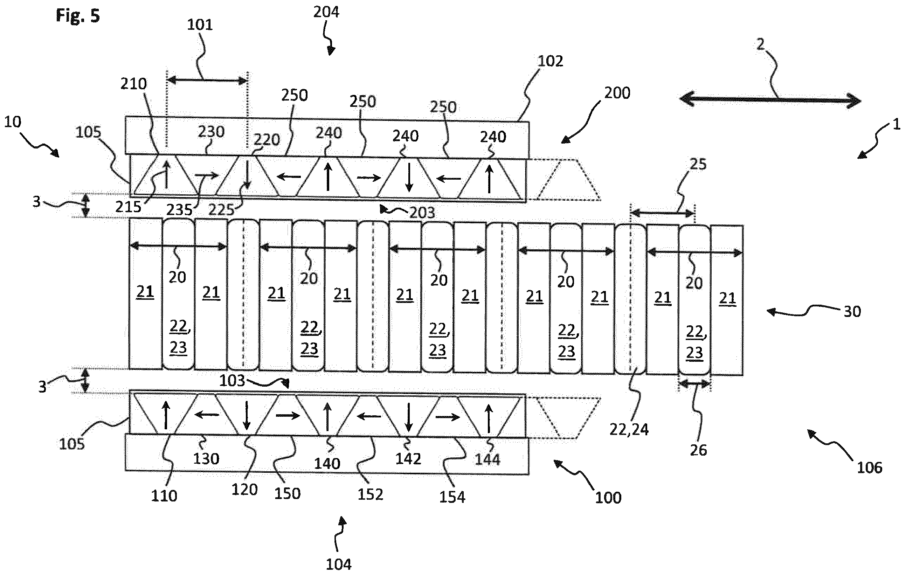

**Figur 5** zeigt eine schematische Darstellung einer in der Schnittebene 106 geschnittenen Aufsicht auf den Stator 30 und den Läufer 10 des elektrischen Motors 1.

In Figur 5 sind die Polzähne 22 des Stators 30 dargestellt. Um jeden zweiten der entlang des Pfades 2 angeordneten Polzähne 22 ist jeweils eine Spulenwicklung 21 der Antriebsspulen 20 des elektrischen Motors 1 gewickelt. Die umwickelten Polzähne 22 bilden jeweils Spulenzähne 23 des elektrischen Motors 1. Von den Spulenwicklungen 21 sind in Figur 5 jeweils die in der Schnittebene 106 zwischen den Polzähnen 22 liegenden Querschnittsflächen dargestellt. Die Spulenwicklungen 21 und die Spulenzähne 23 bilden jeweils Bestandteile der Antriebsspulen 20 des elektrischen Motors 1. Die Polzähne 22 zwischen den Antriebsspulen 20 bilden jeweils Zwischenzähne 24, welche nicht mit einer der Spulenwicklungen 21 umwickelt sind.

In Figur 5 sind insgesamt fünf Antriebsspulen 20 mit Spulenzähnen 23 und vier Zwischenzähne 24 dargestellt. Das Magnetfeld durch die Spulenzähne 23 bestimmt sich jeweils durch den Stromfluss durch diejenige der Spulenwicklungen 21, welche um den betreffenden Spulenzahn 23 gewickelt ist. Das Magnetfeld durch einen der Zwischenzähne 24 bestimmt sich jeweils aus den Stromflüssen durch die Spulenwicklungen 21 der beiden benachbart an dem betreffenden Zwischenzahn 24 angeordneten Antriebsspulen 20.

Von dem Läufer 10 sind in Figur 5 die auf einer Seite des Stators 30 angeordnete Magnetanordnung 100 und die auf der gegenüberliegenden Seite des Stators 30 angeordnete weitere Magnetanordnung 200 im Querschnitt dargestellt. Soweit im Folgenden keine Unterscheide beschrieben werden, ist die weitere Magnetanordnung 200 ausgebildet wie die Magnetanordnung 100 und auch auf dieselbe Weise wie die Magnetanordnung 100 an dem Läufer 10 angeordnet und befestigt.

Die weitere Magnetanordnung 200 umfasst insbesondere einen ersten Antriebsmagneten 210, einen zweiten Antriebsmagneten 220 und einen entlang des Pfades 2 zwischen dem ersten und zweiten Antriebsmagneten 210, 220 und an den ersten und zweiten Antriebsmagneten 210, 220 anschließend angeordneten Kompensationsmagneten 230. Die weitere Magnetanordnung 200 umfasst darüber hinaus drei weitere Antriebsmagnete 240 und drei weitere Kompensationsmagnete 250, wobei die weiteren Antriebsmagnete 240 an den zweiten Antriebsmagneten 220 anschließend entlang des Pfades 2 angeordnet sind und die weiteren Kompensationsmagnete 250 entlang des Pfades 2 jeweils zwischen den weiteren Antriebsmagneten 240 und an diese anschließend angeordnet sind. Damit umfasst die weitere Magnetanordnung 200, wie die Magnetanordnung 100, insgesamt fünf Antriebsmagnete 210, 220, 240 und vier Kompensationsmagnete 230, 250.

Soweit im Folgenden keine Unterschiede beschrieben werden, sind die Antriebsmagnete 210, 220, 240 und die Kompensationsmagnete 230, 250 der weiteren Magnetanordnung 200 ausgebildet wie die bereits zuvor beschriebenen Antriebsmagnete 110, 120, 140, 142, 144 bzw. die Kompensationsmagnete 130, 150, 152, 154 der Magnetanordnung 100. Der erste Antriebsmagnet 210 der weiteren Magnetanordnung 200 ist dem ersten Antriebsmagneten 110 der Magnetanordnung 100 gegenüberliegend an dem Läufer 10 angeordnet. Analog sind der zweite Antriebsmagnet 220 und der Kompensationsmagnet 230 der weiteren Magnetanordnung 200 dem zweiten Antriebsmagneten 120 bzw. dem Kompensationsmagneten 130 der Magnetanordnung 100 gegenüberliegend an dem Läufer 10 angeordnet. Die weiteren Antriebsmagneten 240 und die weiteren Kompensationsmagneten 250 der weiteren Magnetanordnung 200 sind jeweils den weiteren Antriebsmagneten 140, 142, 144 bzw. den weiteren Kompensationsmagneten 150, 152, 154 der Magnetanordnung 100 gegenüberliegend an dem Läufer 20 angeordnet.

Jeder der Antriebsmagneten 210, 220, 240 der weiteren Magnetanordnung 200 ist in der Schnittebene 106 jeweils in derselben Richtung magnetisiert wie der jeweils Gegenüberliegende der Antriebsmagneten 110, 120, 140, 142, 144 der Magnetanordnung 100.

Insbesondere weist eine Magnetisierung 215 des ersten Antriebsmagneten 210 der weiteren Magnetanordnung 200 von einer spulenzugewandten Seite 203 der weiteren Magnetanordnung 200 in Richtung einer spulenabgewandten Seite 204 der weiteren Magnetanordnung 200 und eine Magnetisierung 225 des zweiten Antriebsmagneten 220 der weiteren Magnetanordnung 200 von der spulenabgewandten Seite 204 in Richtung der spulenzugewandten Seite 203 der weiteren Magnetanordnung 200.

Wie bei der Magnetanordnung 100 sind die Kompensationsmagnete 230, 250 der weiteren Magnetanordnung 200 jeweils derart parallel zu dem Pfad 2 magnetisiert, dass ihre Magnetisierung von demjenigen benachbarten Antriebsmagneten, der in Richtung der spulenabgewandten Seite 204 der Magnetanordnung magnetisiert ist, zu demjenigen benachbarten Antriebsmagneten gerichtet ist, welcher in Richtung der spulenzugewandten Seite 203 magnetisiert ist. Insbesondere weist also der Kompensationsmagnet 230 der weiteren Magnetanordnung 200 eine Magnetisierung 235 auf, die parallel zu dem Pfad 2 orientiert und von dem ersten Antriebsmagneten 210 in Richtung des zweiten Antriebsmagneten 220 der weiteren Magnetanordnung 200 gerichtet ist.

Zwischen den spulenzugewandten Seiten 103, 203 der Magnetanordnungen 100, 200 und dem Stator 30 weist der elektrische Motor 1 jeweils einen Spalt 3 auf. In der Schnittebene 106 entspricht die Breite des Spaltes 3 senkrecht zu dem Pfad 2 dem Abstand zwischen den Stirnflächen der Polzähne 22 und den spulenzugewandten Seiten 103, 203 der Magnetanordnungen 100, 200.

Die Magnetanordnungen 100, 200 umfassen jeweils eine Abdeckung 105, welche die Magnete der Magnetanordnungen 100, 200 umschließen. Insbesondere bedecken die Abdeckungen 105 jeweils die spulenzugewandten Seitenflächen der Antriebsmagnete 110, 120, 140, 142, 144, 210, 220, 240 der Magnetanordnungen 100, 200, also insbesondere die Seitenflächen 111, 121. Diejenigen Teile der Abdeckungen 105, die sich zwischen den Magnetanordnungen 100, 200 und dem Stator 30 befinden, füllen jeweils einen Teil der Spalte 3 aus. Die betreffenden Teile der Abdeckungen 105 können in der Richtung senkrecht zu dem Pfad 2 eine Dicke von mehr als 0,1mm, insbesondere eine Dicke von mehr als 0,2mm, aufweisen.

Die Abdeckungen 105 bestehen aus einem unmagnetischen Material, beispielswiese aus einem unmagnetischen Edelstahl, aus Aluminium oder aus einem Kunststoff. Durch die Abdeckungen 105 sind die Magnete der Magnetanordnungen 100, 200 vor mechanischen äußeren Einwirkungen und Verschmutzung geschützt.

Bei dem elektrischen Motor 1 variiert je nach relativer Lage zwischen den Antriebsmagneten 110, 120, 140, 142, 144, 210, 220, 240 der ersten und zweiten Magnetanordnung 100, 200 und den Polzähnen 22 des Stators 30 der magnetische Widerstand, dem das durch die Antriebsmagneten 110, 120, 140, 142, 144, 210, 220, 240 erzeugte Magnetfeld auf der spulenzugewandten Seite 103 ausgesetzt ist. Durch diese Variation des magnetischen Widerstandes wird eine positionsabhängige Kraft auf den Läufer 10 ausgeübt. Diese Kraft erzeugt je nach Stellung des Läufers 10 relativ zu dem Stator 30 ein variables Rastmoment, welches bei einer Bewegung des Läufers 10 entlang des Stators 30 überwunden werden muss.

Die Größe des Rastmoments wird sowohl durch die Geometrie und Anordnung der Antriebsmagneten 110, 120, 140, 142, 144, 210, 220, 240, als auch durch die Geometrie und Anordnung der Polzähne 22 beeinflusst. So ist der magnetische Widerstand im Magnetkreis eines der Antriebsmagneten 110, 120, 140, 142, 144, 210, 220, 240 beispielsweise minimal, wenn der betreffende Antriebsmagnet 110, 120, 140, 142, 144, 210, 220, 240 zentriert gegenüber einem der Polzähne 22 ausgerichtet ist. Analog dazu ist der magnetische Widerstand im Magnetkreis eines der Antriebsmagneten 110, 120, 140, 142, 144, 210, 220, 240 maximal, wenn der betreffende Antriebsmagnet 110, 120, 140, 142, 144, 210, 220, 240 zwischen zweien der Polzähne 22 zentriert ist.

Die Wirkung, die die Polzähne 22 auf einen der Antriebsmagneten 110, 120, 140, 142, 144, 210, 220, 240 ausüben, kann durch die Wirkung, die die Polzähne 22 auf einen anderen der Antriebsmagneten 110, 120, 140, 142, 144, 210, 220, 240 ausüben, kompensiert werden. Dies ist beispielsweise dann der Fall, wenn in einer Stellung des Läufers 10 gegenüber dem Stator 30, in der der magnetische Widerstand im Magnetkreis eines der Antriebsmagneten 110, 120, 140, 142, 144, 210, 220, 240 minimal ist, der magnetische Widerstand im Magnetkreis eines anderen der Antriebsmagneten 110, 120, 140, 142, 144, 210, 220, 240 gerade maximal ist. Andererseits wird die Wirkung der Polzähne 22 auf die Antriebsmagneten 110, 120, 140, 142, 144, 210, 220, 240 verstärkt, wenn zwei oder mehr der Antriebsmagneten 110, 120, 140, 142, 144, 210, 220, 240 die gleiche relative Lage gegenüber den Polzähnen 22 einnehmen. So tritt beispielsweise ein besonders hohes Rastmoment auf, wenn zwei oder mehr der Antriebsmagnete 110, 120, 140, 142, 144, 210, 220, 240 jeweils über einem der Polzähne 22 zentriert sind.

Bei dem elektrischen Motor 1 ist eine Polzahnbreite 26, welche die Breite der Polzähne 22 parallel zu dem Pfad 2 angibt, so groß bemessen, dass keine oder lediglich eine geringe magnetische Sättigung des Materials der Polzähne 22 im Betrieb des elektrischen Motors 1 auftritt. Gleichzeitig ist die Polzahnbreite 26 entlang des Pfades 2 kleiner als die jeweils spulenzugewandten Breiten der Antriebsmagnete 110, 120, 140, 142, 144 der Magnetanordnungen 100 und der Antriebsmagnete 210, 220, 240 der weiteren Magnetanordnung 200. Die Polzahnbreite 26 der Polzähne 22 entlang des Pfades 2 ist also kleiner als die spulenzugewandte Breite 113 der ersten Querschnittsfläche 112 und die spulenzugewandte Breite 123 der zweiten Querschnittsfläche 122. Insbesondere entspricht die Breite der Antriebsmagnete 110, 120, 140, 142, 144 entlang des Pfades 2 auf der spulenzugewandten Seite 103 nicht der Polzahnbreite 26 der Polzähne 22.

Die Antriebsmagnete 110, 120, 140, 142, 144, 210, 220, 240 der Magnetanordnungen 100, 200 sind entlang des Pfades 2 jeweils in einem Magnetabstand 101 voneinander beabstandet angeordnet. Der Magnetabstand 101 entspricht der Summe aus der spulenzugewandten Breite 113 der ersten Querschnittsfläche 112 des ersten Antriebsmagneten 110 und aus der spulenzugewandten Breite 133 der dritten Querschnittsfläche 132 des Kompensationsmagneten 130. Die Polzähne 22 des elektrischen Motors 1 sind in einem Polabstand 25 gleichmäßig voneinander beabstandet entlang des Pfades 2 angeordnet. Der Polabstand 25 bezeichnet also jeweils den Abstand zwischen einem der Spulenzähne 23 und einem benachbarten Zwischenzahn 24.

Bei dem elektrischen Motor 1 entspricht das Fünffache des Magnetabstandes 101 dem Sechsfachen des Polabstandes 25. Dies ist in Figur 5 dargestellt durch zusätzliche Antriebsmagnete und zusätzliche Kompensationsmagnete, welche jeweils gestrichelt dargestellt sind und von den Magnetanordnungen 100, 200 nicht umfasst werden.

Da der größte gemeinsame Teiler des Polabstandes 25 und des Magnetabstandes 101 gleich eins ist, gibt es keine Position des Läufers 10 entlang des Stators 30, in der zwei oder mehr der Antriebsmagnete 110, 120, 140, 142, 144 die gleiche relative Lage gegenüber den Polzähnen 22 aufweisen. In jeder Stellung des Läufers 10 unterscheiden sich also die relativen Lagen der Antriebsmagnete 110, 120, 140, 142, 144 gegenüber den Polzähnen 22 voneinander. Insbesondere ist in der in Figur 5 gezeigten Stellung des Läufers 10 neben dem ersten Antriebsmagneten 110 kein Weiterer der Antriebsmagnete 120, 140, 142, 144 der ersten Magnetanordnung 100 zentriert mit einem der Polzähne 22 des Stators 30 ausgerichtet. Analog gilt dies auch für die Antriebsmagneten 210, 220, 250 der weiteren Magnetanordnung 200.

Außerdem sind bei dem elektrischen Motor 1 die Breite der Antriebsmagneten 110, 120, 140, 142, 144 und die Breite der Stirnflächen der Polzähne 22 entlang des Pfades 2, sowie das Längenverhältnis zwischen dem Magnetabstand 101 und dem Polabstand 25 derart, dass in jeder Position des Läufers 10 entlang des Stators 30 jeweils nur bei einem der Antriebsmagnete 110, 120, 140, 142, 144 der Magnetanordnung 100 eine senkrecht zu der Schnittebene 106 orientierten Kante der Seitenfläche des entsprechenden Antriebsmagneten 110, 120, 140, 142, 144 fluchtend mit einer senkrecht zu der Schnittebene 106 orientierten Kante der Stirnfläche der Polzähne 22 ausgerichtet ist. Dies minimiert die bei einer Bewegung des Läufers 10 entlang des Stators 30 auftretenden Rastmomente.

Die spulenzugewandte Breite der Antriebsmagnete 110, 120, 140, 142, 144 parallel zu dem Pfad 2, also insbesondere die spulenzugewandten Breiten 113, 123 der Querschnittsflächen 112, 122 der Antriebsmagneten 110, 120, kann beispielsweise 7,8 mm betragen. Der Abstand zwischen den Antriebsmagneten 110, 120, 140, 142, 144, also die spulenzugewandte Breite der Kompensationsmagneten 130, 150, 152, 154, insbesondere die spulenzugewandte Breite 133 der Querschnittsfläche 132 des Kompensationsmagneten 130, kann beispielsweise 2,2mm betragen, während die Höhe der Seitenflächen 111, 121, 131 und die Höhe der Antriebs- und Kompensationsmagneten 110, 120, 130, 140, 142, 144, 150, 152, 154 der Magnetanordnung 100 beispielsweise 17mm betragen kann. Die Breite der Stirnflächen der Polzähne 22 entlang des Pfades 2 kann beispielsweise 4mm betragen, ihre Höhe senkrecht zur Schnittebene 106 beispielsweise 17mm. Der Magnetabstand 101 des elektrischen Motors 1 beträgt in solch einem Fall 10mm und der Polabstand 25 beträgt 8,33mm.

Geringe Rastmomente können bei alternativen Ausführungsformen des elektrischen Motors 1 auch bei einem anderen Längenverhältnis aus Polabstand 25 und Magnetabstand 101 erreicht werden, solange deren größter gemeinsamer Teiler gleich eins ist. Umfasst eine Magnetanordnung des elektrischen Motors 1 insgesamt eine Anzahl M von Antriebsmagneten, wird gleichzeitig eine hohe Kraftübertragung auf den Läufer 10 immer dann erreicht, wenn das (M+1)-fache des Polabstandes 25 dem M-fachen des Magnetabstandes 101 entspricht.

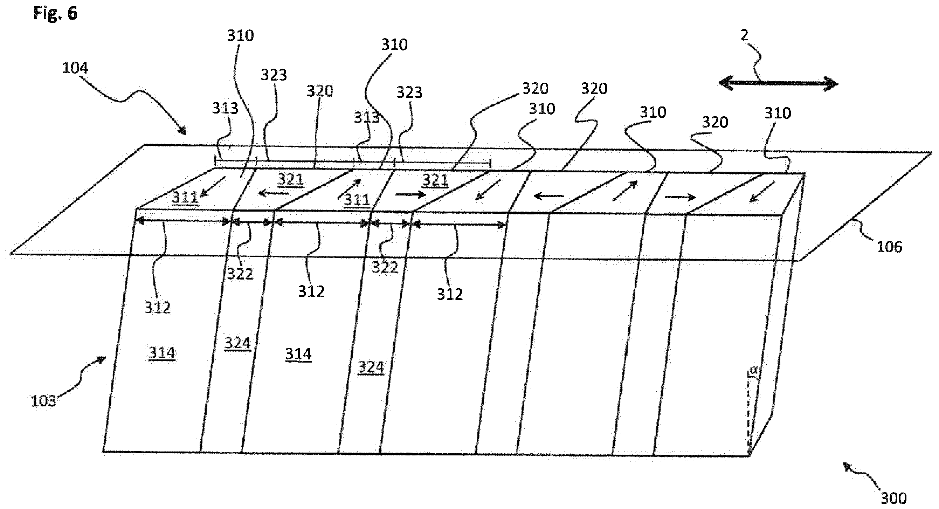

**Figur 6** zeigt eine schematische Darstellung einer perspektivischen Ansicht einer ersten alternativen Magnetanordnung 300 für den Läufer 10 des elektrischen Motors 1. Soweit im Folgenden keine Unterscheide beschrieben werden, ist die erste alternative Magnetanordnung 300 ausgebildet wie die Magnetanordnung 100. Die erste alternative Magnetanordnung 300 umfasst fünf entlang des Pfades 2 angeordnete Antriebsmagnete 310, sowie vier, jeweils zwischen den Antriebsmagneten 310 angeordnete Kompensationsmagnete 320.

Soweit im Folgenden keine Unterscheide beschrieben werden, sind die Antriebsmagnete 310 und die Kompensationsmagnete 320 ausgebildet wie die Antriebsmagnete 110, 120, 140, 142, 144 bzw. die Kompensationsmagnete 130, 150, 152, 154 der Magnetanordnung 100.

Insbesondere weisen die Antriebsmagnete 310 und die Kompensationsmagnete 320, soweit keine Unterschiede beschrieben sind, die gleichen Formen, Abmessungen und Magnetisierungen auf, wie die entsprechenden Antriebsmagneten 110, 120, 140, 142, 144 bzw. die entsprechenden Kompensationsmagneten 130, 150, 152, 154 der Magnetanordnung 100.

Wie bei der Magnetanordnung 100, weisen in der Schnittebene 106 entlang der Spulenachsen der Antriebsspulen 20 die Antriebsmagnete 310 jeweils Querschnittsflächen 311 und die Kompensationsmagnete 320 jeweils Querschnittsflächen 321 auf, die jeweils als gleichschenklige Trapeze mit identischen Abmessungen ausgebildet sind, also insbesondere den gleichen Flächeninhalt aufweisen. Eine spulenzugewandte Breite 312 der Querschnittsflächen 311 der Antriebmagnete 310 ist größer als eine spulenzugewandte Breite 322 der Querschnittsflächen 321 der Kompensationsmagnete 320. Die Querschnittflächen 311 der Antriebsmagnete 310 verjüngen sich von der spulenzugewandten Seite 103 in Richtung der spulenabgewandten Seite 104, so dass die spulenzugewandte Breite 312 der Querschnittsflächen 311 größer ist als spulenabgewandte Breiten 313 der Querschnittsflächen 311 auf der spulenabgewandten Seite 104. Die Querschnittflächen 321 der Kompensationsmagnete 320 verbreitern sich von der spulenzugewandten Seite 103 in Richtung der spulenabgewandten Seite 104, so dass die spulenzugewandte Breite 322 der Querschnittsflächen 321 größer ist als spulenabgewandte Breiten 323 der Querschnittsflächen 321 auf der spulenabgewandten Seite 104.

Wie bei der ersten Magnetanordnung 100, hinterschneiden bei der ersten alternativen Magnetanordnung 300 die Querschnittsflächen 321 der Kompensationsmagneten 320 auf der spulenabgewandten Seite 104 die Querschnittsflächen 311 der Antriebsmagnete 310.

Im Unterschied zu den Antriebs- und Kompensationsmagneten 110, 120, 130, 140, 142, 144, 150, 152, 154 der Magnetanordnung 100 sind die Antriebsmagnete 310 und die Kompensationsmagnete 320 der ersten alternativen Magnetanordnung 300 nicht als senkrechte bzw. gerade Zylinder, sondern als schiefe Zylinder ausgebildet. Dadurch steht die Zylinderachse der Magnete 310, 320 nicht senkrecht auf der den Querschnittsflächen 311, 321 entsprechenden Grundfläche der Magnete 310, 320, sondern ist entlang des Pfades 2 um einen Winkel α gekippt. Spulenzugewandte Seitenflächen 314 der Antriebsmagnete 310 und spulenzugewandte Seitenflächen 324 der Kompensationsmagneten 320 sind folglich, anders als bei der Magnetanordnung 100, nicht rechteckig, sondern als Parallelogramm ausgebildet. Die Verkippung der Antriebsmagnete 310 und der Kompensationsmagnete 320 der ersten alternativen Magnetanordnung 300 um den Winkel α hat zur Folge, dass keine der Kanten der Seitenflächen 314 der ersten alternativen Magnetanordnung senkrecht zu der Schnittebene 106 orientiert ist und damit parallel zu einer senkrecht zu der Schnittebene 106 orientierten Kante der an dem Statorgehäuse 32 des Stators 30 freiliegenden Stirnflächen der Polzähne 22 ausgerichtet ist.

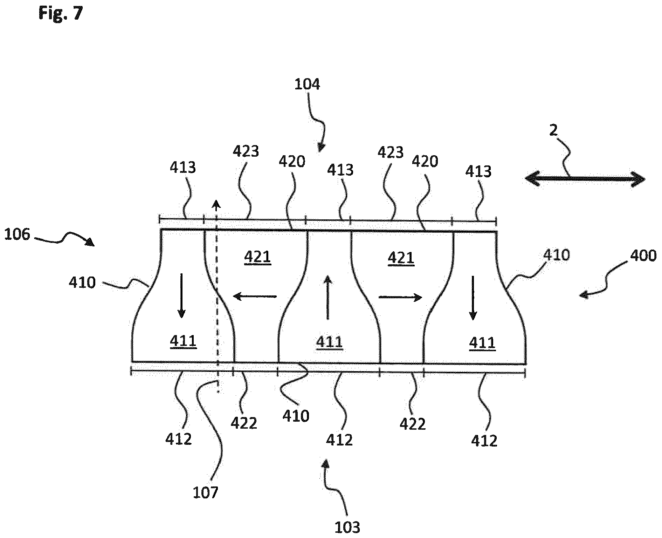

**Figur 7** zeigt eine schematische Darstellung einer in der Schnittebene 106 geschnittenen Aufsicht auf eine zweite alternative Magnetanordnung 400 für den Läufer 10 des elektrischen Motors 1. Soweit im Folgenden keine Unterscheide beschrieben werden, ist die zweite alternative Magnetanordnung 400 ausgebildet wie die Magnetanordnung 100 oder die erste alternative Magnetanordnung 300.

Die zweite alternative Magnetanordnung 400 weist drei entlang des Pfades 2 angeordnete Antriebsmagnete 410, sowie zwei entlang des Pfades 2 jeweils zwischen den Antriebsmagneten 410 und an die Antriebsmagnete 410 anschließend angeordnete Kompensationsmagnete 420 auf. Soweit im Folgenden keine Unterscheide beschrieben werden, sind die Antriebsmagnete 410 und die Kompensationsmagnete 420 ausgebildet wie die Antriebsmagnete 110, 120, 140 bzw. wie die Kompensationsmagnete 130, 150 der Magnetanordnung 100 oder die Antriebsmagnete 310 bzw. die Kompensationsmagnete 320 der ersten alternativen Magnetanordnung 300.

Anders als die Antriebsmagnete 110, 120, 140, 310 der Magnetanordnungen 100, 300 weisen die Antriebsmagnete 410 der zweiten alternativen Magnetanordnung 400 in der in Figur 7 dargestellten Schnittebene 106 keine trapezförmigen Querschnittsflächen auf. Stattdessen weisen die Antriebsmagnete 410 Querschnittsflächen 411 auf, welche sich von der spulenzugewandten Seite 103 der zweiten alternativen Magnetanordnung 400 in Richtung der spulenabgewandten Seite 104 der zweiten alternativen Magnetanordnung 400 flaschenförmig verjüngen.

Die Querschnittsflächen 411 der Antriebsmagnete 410 weisen zwei parallel zu dem Pfad 2 an der spulenzugewandten Seite 103 und der spulenabgewandten Seite 104 verlaufende Kanten auf. Dabei weisen die Querschnittsflächen 411 auf der spulenzugewandten Seite 103 eine spulenzugewandte Breite 412 auf, die größer ist als eine spulenabgewandte Breite 413 auf der spulenabgewandten Seite 104. Die Querschnittsflächen 411 der Antriebsmagneten 410 sind symmetrisch zu einer in der Schnittebene 106 quer zu dem Pfad 2 verlaufenden Mittenachse der Querschnittsflächen 411 ausgebildet.

Die Kompensationsmagnete 420 der zweiten alternativen Magnetanordnung 400 weisen in der Schnittebene 106 jeweils eine Querschnittsfläche 421 auf, deren Form und deren Abmessungen der Form bzw. den Abmessungen der Querschnittsflächen 411 der Antriebsmagneten 410 entspricht, jedoch gegenüber den Querschnittsflächen 411 der Antriebsmagneten 410 um einhundertachtzig Grad gedreht ausgerichtet ist. Damit weisen die Querschnittsflächen 421 der Kompensationsmagneten 420 und die Querschnittsflächen 411 der Antriebsmagneten 410 jeweils den gleichen Flächeninhalt auf, sind also gleich groß.

Die Querschnittsflächen 421 der Kompensationsmagnete 420 weisen, wie die Querschnittsflächen 411 der Antriebsmagnete 410, an der spulenzugewandten Seite 103 und der spulenabgewandten Seite 104 ebenfalls zwei jeweils parallel zu dem Pfad 2 verlaufende Kanten auf. Anders als die Querschnittsflächen 411 verbreitern sich allerdings die Querschnittsflächen 421 der Kompensationsmagneten 420 flaschenförmig von der spulenzugewandten Seite 103 in Richtung der spulenabgewandten Seite 104. Damit ist auf der spulenzugewandten Seite 103 eine spulenzugewandte Breite 422 der Querschnittsfläche 421 der Kompensationsmagnete 420 größer als eine spulenabgewandte Breite 423 der Querschnittsfläche 421 der Kompensationsmagnete 420 auf der spulenabgewandten Seite 104.

Wie bei den Magnetanordnungen 100, 300 ist die spulenzugewandte Breite 412 der Querschnittsflächen 411 der Antriebsmagneten 410 breiter als die spulenzugewandte Breite 422 der Querschnittsflächen 421 der Kompensationsmagneten 420. Zudem entspricht die spulenzugewandte Breite 422 der Querschnittsflächen 421 der Kompensationsmagneten 420 der spulenabgewandten Breite 413 der Querschnittsflächen 411 der Antriebsmagnete 410 der zweiten alternativen Magnetanordnung 400. Die spulenzugewandte Breite 412 der Querschnittsflächen 411 der Antriebsmagnete 410 entspricht der spulenabgewandten Breite 423 der Querschnittsflächen 421 der Kompensationsmagnete 420 der zweiten alternativen Magnetanordnung 400.

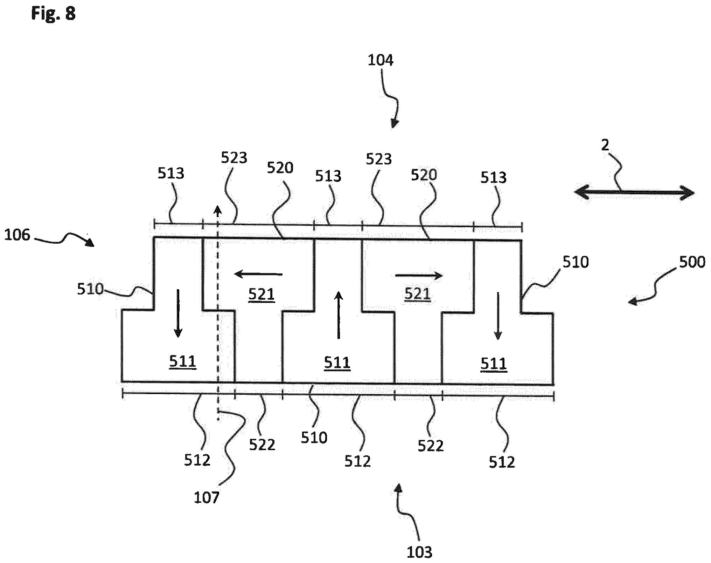

**Figur 8** zeigt eine schematische Darstellung einer in der Schnittebene 106 geschnittenen Aufsicht auf eine dritte alternative Magnetanordnung 500 für den Läufer des elektrischen Motors 1. Soweit im Folgenden keine Unterscheide beschrieben werden, ist die dritte alternative Magnetanordnung 500 ausgebildet wie die Magnetanordnung 100, die erste alternative Magnetanordnung 300 oder die zweite alternative Magnetanordnung 400.

Die dritte alternative Magnetanordnung 500 weist drei entlang des Pfades 2 angeordnete Antriebsmagnete 510, sowie zwei entlang des Pfades 2 jeweils zwischen den Antriebsmagneten 510 und an die Antriebsmagnete 510 anschließend angeordnete Kompensationsmagnete 520 auf. Soweit im Folgenden keine Unterscheide beschrieben werden, sind die Antriebsmagnete 510 und die Kompensationsmagnete 520 ausgebildet wie die Antriebsmagnete 110, 120, 140 bzw. die Kompensationsmagnete 130, 150 der Magnetanordnung 100, die Antriebsmagnete 310 bzw. Kompensationsmagnete 320 der ersten alternativen Magnetanordnung 300 oder die Antriebsmagnete 410 bzw. die Kompensationsmagnete 420 der zweiten alternativen Magnetanordnung 400.

In der in Figur 8 dargestellten Schnittebene 106 weisen die Antriebsmagnete 510 der dritten alternativen Magnetanordnung 500 jeweils eine Querschnittsfläche 511 auf, welche T-förmig ausgebildet ist und sich von der spulenzugewandten Seite 103 der dritten alternativen Magnetanordnung 500 in Richtung der spulenabgewandten Seite 104 der dritten alternativen Magnetanordnung 500 stufenförmig verjüngt. Die Querschnittsflächen 511 der Antriebsmagneten 510 weisen jeweils zwei zu dem Pfad 2 parallele Kanten auf, welche auf der spulenzugewandten Seite 103 und der spulenabgewandten Seite 104 angeordnet sind. Dabei weist die Querschnittsfläche 511 auf der spulenzugewandten Seite 103 eine spulenzugewandte Breite 512 auf, die größer ist als eine spulenabgewandte Breite 513 auf der spulenabgewandten Seite 104.

Mittig zwischen den Kanten auf der spulenzugewandten Seite 103 und den Kanten auf der spulenabgewandten Seite 104 weisen die Querschnittsflächen an der stufenförmigen Verjüngung zwei parallel zu den Kanten an der spulenzugewandten Seite 103 und der spulenabgewandten Seite 104 verlaufende weitere Kanten auf. Die Querschnittsflächen 511 der Antriebsmagneten 510 sind symmetrisch zu einer in der Schnittebene 106 quer zu dem Pfad 2 verlaufenden Mittenachse der Querschnittsflächen 511 ausgebildet.

Die Kompensationsmagnete 520 der dritten alternativen Magnetanordnung 500 weisen in der Schnittebene 106 jeweils eine Querschnittsfläche 521 auf, deren Form und deren Abmessungen der Form bzw. den Abmessungen der Querschnittsflächen 511 der Antriebsmagneten 510 entspricht, jedoch gegenüber den Querschnittsflächen 511 der Antriebsmagneten 510 um einhundertachtzig Grad gedreht ausgerichtet sind. Damit weisen die Querschnittsflächen 511 der Antriebsmagneten 510 und die Querschnittsflächen 521 der Kompensationsmagneten 520 den gleichen Flächeninhalt auf, sind also gleich groß.

Die Querschnittsflächen 521 der Kompensationsmagneten 520 sind wie die Querschnittsflächen 511 der Antriebsmagneten 510 T-förmig und symmetrisch zu einer quer zu dem Pfad 2 verlaufenden Mittenachse der Querschnittsflächen 521 ausgebildet und weisen an der spulenzugewandten Seite 103 und der spulenabgewandten Seite 104 jeweils parallel zu dem Pfad 2 verlaufende Kanten auf. Anders als die Querschnittsflächen 511 der Antriebsmagneten 510 verbreitern sich jedoch die Querschnittsflächen 521 der Kompensationsmagneten 520 stufenförmig von der spulenzugewandten Seite 103 in Richtung der spulenabgewandten Seite 104. Damit ist eine spulenzugewandte Breite 522 der Querschnittsflächen 521 der Kompensationsmagnete 520 schmaler als eine spulenabgewandte Breite 523 der Querschnittsflächen 521 der Kompensationsmagnete 520.

Wie bei den Magnetanordnungen 100, 300, 400 ist die spulenzugewandte Breite 512 der Querschnittsflächen 511 der Antriebsmagneten 510 breiter als die spulenzugewandte Breite 522 der Querschnittsflächen 521 der Kompensationsmagneten 520. Zudem entspricht die spulenzugewandte Breite 522 der Querschnittsflächen 521 der Kompensationsmagneten 520 der spulenabgewandten Breite 513 der Querschnittsflächen 511 der Antriebsmagnete 510. Die spulenzugewandte Breite 512 der Querschnittsflächen 511 der Antriebsmagnete 510 entspricht der spulenabgewandten Breite 523 der Querschnittsflächen 521 der Kompensationsmagnete 520.

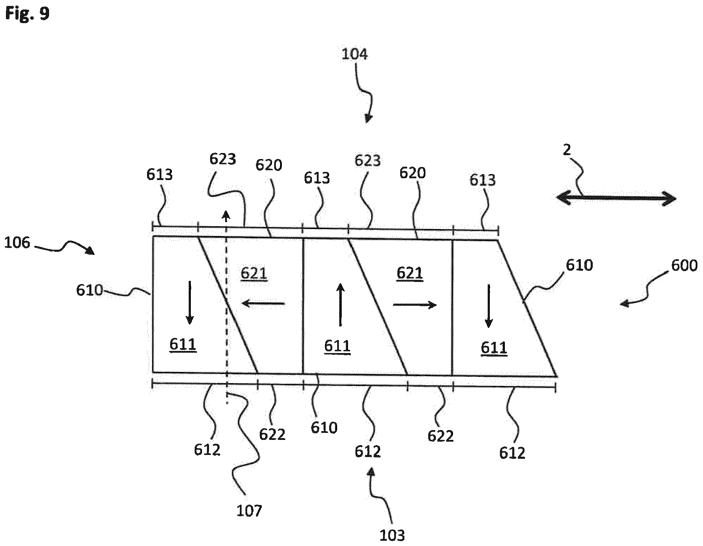

**Figur 9** zeigt eine schematische Darstellung einer in der Schnittebene 106 geschnittenen Aufsicht auf eine vierte alternative Magnetanordnung 600 für den Läufer des elektrischen Motors 1. Soweit im Folgenden keine Unterscheide beschrieben werden, ist die vierte alternative Magnetanordnung 600 ausgebildet wie die Magnetanordnung 100, die erste alternative Magnetanordnung 300, die zweite alternative Magnetanordnung 400 oder die dritte alternative Magnetanordnung 500.

Die vierte alternative Magnetanordnung 600 weist drei entlang des Pfades 2 angeordnete Antriebsmagnete 610, sowie zwei Kompensationsmagnete 620 auf, welche entlang des Pfades 2 jeweils zwischen den Antriebsmagneten 610 und an die Antriebsmagneten 610 anschließend angeordnet sind. Soweit im Folgenden keine Unterscheide beschrieben werden, sind die Antriebsmagnete 610 und die Kompensationsmagnete 620 ausgebildet wie die Antriebsmagnete 110, 120, 140 bzw. die Kompensationsmagnete 130, 150 der Magnetanordnung 100, die Antriebsmagnete 310 bzw. Kompensationsmagnete 320 der ersten alternativen Magnetanordnung 300, die Antriebsmagnete 410 bzw. die Kompensationsmagnete 420 der zweiten alternativen Magnetanordnung 400 oder die Antriebsmagnete 510 bzw. Kompensationsmagnete 520 der dritten alternativen Magnetanordnung 500.

Die Antriebsmagnete 610 der vierten alternativen Magnetanordnung 600 weisen in der in Figur 9 dargestellten Schnittebene 106 jeweils Querschnittsflächen 611 auf, welche als rechtwinklige Trapeze ausgebildet sind. Dabei sind die beiden parallelen Kanten der als rechtwinklige Trapeze ausgebildeten Querschnittsflächen 611 parallel zu dem Pfad 2 ausgerichtet und liegen jeweils auf der spulenzugewandten Seite 103 und der spulenabgewandten Seite 104 der vierten alternativen Magnetanordnung 600. Die Querschnittsflächen 610 der Antriebsmagnete erstrecken sich damit zwischen der spulenzugewandten Seite 103 und der spulenabgewandten Seite 104 der Magnetanordnung 600. Die Querschnittsflächen 611 der Antriebsmagnete 610 verjüngen sich von der spulenzugewandten Seite 103 in Richtung der spulenabgewandten Seite 104, so dass eine spulenzugewandte Breite 612 der Querschnittsflächen 611 größer ist als eine spulenabgewandte Breite 613 der Querschnittsflächen 611.

Die Kompensationsmagnete 620 weisen in der Schnittebene 106 jeweils eine Querschnittsfläche 621 auf, deren Form und deren Abmessungen der Form bzw. den Abmessungen der Querschnittsflächen 611 der Antriebsmagneten 610 entspricht, jedoch gegenüber den Querschnittsflächen 611 der Antriebsmagneten 610 um einhundertachtzig Grad gedreht ausgerichtet sind. Die Querschnittsflächen 621 der Kompensationsmagneten 620 haben folglich ebenfalls die Form eines rechtwinkligen Trapezes und weisen insbesondere den gleichen Flächeninhalt auf wie die Querschnittsflächen 611 der Antriebsmagneten 610. Die Querschnittsflächen 621 der Antriebsmagnete 610 und die Querschnittsflächen 621 der Kompensationsmagnete 620 sind also gleich groß.

Die Querschnittsflächen 621 der Kompensationsmagnete 620 weisen, wie die Querschnittsflächen 611 der Antriebsmagnete 610, ebenfalls zwei parallel zu dem Pfad 2 an der spulenzugewandten Seite 103 und der spulenabgewandten Seite 104 verlaufende Kanten auf. Anders als die Querschnittsflächen 611 der Antriebsmagneten 610 verbreitern sich jedoch die Querschnittsflächen 621 der Kompensationsmagneten 620 von der spulenzugewandten Seite 103 in Richtung der spulenabgewandten Seite 104. Damit ist eine spulenzugewandte Breite 622 der Querschnittsflächen 621 der Kompensationsmagnete 620 schmaler als eine spulenabgewandte Breite 623 der Querschnittsflächen 621 der Kompensationsmagnete 620.

Wie bei den Magnetanordnungen 100, 300, 400, 500 ist die spulenzugewandte Breite 612 der Querschnittsflächen 611 der Antriebsmagneten 610 breiter als die spulenzugewandte Breite 622 der Querschnittsflächen 621 der Kompensationsmagnete 620. Zudem entspricht die spulenzugewandte Breite 622 der Querschnittsflächen 621 der Kompensationsmagneten 620 der spulenabgewandten Breite 613 der Querschnittsflächen 611 der Antriebsmagneten 610. Die spulenzugewandte Breite 613 der Querschnittsflächen 611 der Antriebsmagnete 610 entspricht der spulenabgewandten Breite 623 der Querschnittsflächen 621 der Kompensationsmagneten 620.

Bei den alternativen Magnetanordnungen 400, 500, 600 hinterschneiden in der Querrichtung 107 jeweils die Querschnittsflächen 421, 521, 621 der Kompensationsmagnete 420, 520, 620 die Querschnittsflächen 411, 511, 611 der Antriebsmagnete 410, 510, 610 auf der spulenabgewandten Seite 104 der alternativen Magnetanordnungen 400, 500, 600. Folglich befinden sich in Bereichen, in denen die Antriebsmagnete 410, 510, 610 und die Kompensationsmagnete 420, 520, 620 aneinander angrenzen, in Richtung der spulenabgewandten Seite 104 liegende Teile der Querschnittsflächen 421, 521, 621 der Kompensationsmagnete 420, 520, 620 in der Querrichtung 107 hinter in Richtung der spulenzugewandten Seite 103 liegenden Teilen der Querschnittsflächen 411, 511, 611 der Antriebsmagnete 410, 510, 610. Bei den alternativen Magnetanordnungen 400, 500, 600 befinden sich Teile der Kanten der Querschnittsflächen 411, 511, 611 der Antriebsmagnete 410, 510, 610, die auf der spulenzugewandten Seite 103 parallel zu dem Pfad 2 verlaufen, in der Querrichtung 107 vor Teilen der Kanten der Querschnittsflächen 421, 521, 621 der Kompensationsmagnete 420, 520, 620, die auf der spulenabgewandten Seite 104 parallel zu dem Pfad 2 verlaufen.

Während bei der zweiten und der dritten alternativen Magnetanordnung 400, 500 die Querschnittsflächen 411, 511 der Antriebsmagnete 410, 510 auf beiden zwischen der spulenzugewandten Seite 103 und der spulenabgewandten Seite 104 verlaufenden Querseiten von den Querschnittsflächen 421, 521 der Kompensationsmagnete 420, 520 hinterschnitten werden, werden bei der vierten alternativen Magnetanordnung 600 die Querschnittsflächen 611 der Antriebsmagnete 610 nur auf einer zwischen der spulenzugewandten Seite 103 und der spulenabgewandten Seite 104 verlaufenden Querseite von den Querschnittsflächen 621 der Kompensationsmagnete 620 hinterschnitten.

Wie die Antriebsmagnete 110, 120, 140 der ersten Magnetanordnung 100 und die Antriebsmagnete 310 der ersten alternativen Magnetanordnung 300 weisen die Antriebsmagnete 410 der zweiten alternativen Magnetanordnung 400, die Antriebsmagnete 510 der dritten alternativen Magnetanordnung 500 und die Antriebsmagnete 610 der vierten alternativen Magnetanordnung 600 in den Querschnittsflächen 411, 511, 611 jeweils eine senkrecht zu dem Pfad 2 orientierte Magnetisierung auf, welche in den Figuren 7, 8 und 9 jeweils durch Pfeile dargestellt ist.

Die Magnetisierungen benachbarter Antriebsmagnete 410, 510, 610 sind dabei einander entgegengesetzt ausgerichtet, so dass die Antriebsmagneten 410, 510, 610 der Magnetanordnungen 400, 500, 600, wie die Antriebsmagneten 110, 120, 140, 310 der Magnetanordnungen 100, 300, jeweils abwechselnd in Richtung der spulenzugewandten Seite 103 und der spulenabgewandten Seite 104 magnetisiert sind.

Wie die Kompensationsmagnete 130, 150 der ersten Magnetanordnung 100 und die Kompensationsmagnete 320 der ersten alternativen Magnetanordnung 300 weisen die Kompensationsmagnete 420 der zweiten alternativen Magnetanordnung 400, die Kompensationsmagnete 520 der dritten alternativen Magnetanordnung 500 und die Kompensationsmagnete 620 der vierten alternativen Magnetanordnung 600 in den Querschnittsflächen 421, 521, 621 jeweils eine Magnetisierung auf, welche parallel zu dem Pfad 2 orientiert ist und jeweils von einem Antriebsmagneten 410, 510, 610, welcher in Richtung der spulenabgewandten Seite 104 magnetisiert ist, zu einem Antriebsmagneten 410, 510, 610, welcher in Richtung der spulenzugewandten Seite 103 magnetisiert ist, ausgerichtet ist. Die Richtungen der Magnetisierungen der Kompensationsmagnete 420, 520, 620 sind in den Figuren 7, 8 und 9 ebenfalls durch Pfeile dargestellt.

Wie im Zusammenhang mit Figur 3 für die Magnetanordnung 100 beschrieben, sind bei den Magnetanordnungen 400, 500, 600 die spulenzugewandten Breiten 412, 512, 612 der Antriebsmagnete 410, 510, 610 und die spulenzugewandten Breiten 422, 522, 622 der Kompensationsmagnete 420, 520, 620 jeweils derart groß, dass eine möglichst große Kraftübertragung auf den Läufer 10 erreicht wird und bei einer Bewegung des Läufers 10 entlang des Stators 30 gleichzeitig möglichst geringe Rastmomente auftreten. Insbesondere können die spulenzugewandten Breiten 412, 512, 612 der Antriebsmagneten 410, 510, 610 und die spulenzugewandten Breiten 422, 522, 622 der Kompensationsmagneten 420, 520, 620 derart sein, dass bei einer Anzahl M an Antriebsmagneten 410, 510, 610 das M-fache des Magnetabstandes dem (M+1)-fachen des Polabstandes 25 des elektrischen Motors 1 entspricht. Beispielsweise können die Magnetanordnungen 400, 500, 600 insgesamt jeweils fünf der Antriebsmagnete 410, 510, 610 umfassen und das Fünffachen des Magnetabstandes 101 kann dem Sechsfachen des Polabstandes 25 entsprechen, wie es für die Magnetanordnung 100 in Figur 3 gezeigt ist.

Bei Ausführungsformen des elektrischen Motors 1, bei denen der Läufer 10 eine der alternativen Magnetanordnungen 300, 400, 500, 600 umfasst, kann der Läufer 10 eine weitere Magnetanordnung umfassen, die, wie die in Figur 5 dargestellte weitere Magnetanordnung 200, der ersten alternativen Magnetanordnung 300, der zweiten alternativen Magnetanordnung 400, der dritten alternativen Magnetanordnung 500 bzw. der vierten alternativen Magnetanordnung 600 gegenüberliegend auf der anderen Seite des Stators 30 angeordnet ist.

Die Antriebsmagnete 410 und Kompensationsmagnete 420 der zweiten alternativen Magnetanordnung 400, die Antriebsmagnete 510 und Kompensationsmagnete 520 der dritten alternativen Magnetanordnung 500 und die Antriebsmagnete 610 und Kompensationsmagnete 620 der vierten alternativen Magnetanordnung 600 können wie die Antriebsmagnete 110, 120, 140 und die Kompensationsmagnete 130, 150 der Magnetanordnung 100 als gerade Zylinder ausgebildet sein. In diesem Fall weisen die Antriebsmagnete 410, 510, 610 und die Kompensationsmagnete 420, 520, 620 auf der spulenzugewandten Seite 103 jeweils rechteckige Seitenflächen auf, wie es in der perspektivischen Ansicht der Figur 4 für die Magnetanordnung 100 dargestellt ist.

Die Antriebsmagnete 410, 510, 610 und die Kompensationsmagnete 420, 520, 620 können auch wie die Antriebsmagnete 310 und die Kompensationsmagnete 320 der ersten alternativen Magnetanordnung 300 als um den Winkel α verkippte schiefe Zylinder ausgebildet sein. Dann weisen die Antriebsmagnete 410, 510, 610 und die Kompensationsmagnete 420, 520, 620 jeweils als Parallelogramm ausgebildete Seitenflächen auf, wie es für die erste alternative Magnetanordnung 300 in Figur 6 dargestellt ist.

Bei den Magnetanordnungen 100, 300, 400, 500, 600 erstecken sich die Querschnittsflächen 112, 122, 132, 311, 321, 411, 421, 511, 421, 611, 621 jeweils zwischen der spulenzugewandten Seite 103 und der spulenabgewandten Seite 104 der Magnetanordnungen 100, 300, 400, 500, 600. Auf der spulenzugewandten Seite 103 und auf der spulenabgewandten Seite 104 weisen die Querschnittsflächen 112, 122, 132, 311, 321, 411, 421, 511, 521, 611, 621 jeweils Kanten auf, die parallel zu dem Pfad 2 orientiert sind.

Auf der spulenzugewandten Seite 103 sind die spulenzugewandten Breiten 113, 123, 312, 412, 512, 612 der Querschnittsflächen 112, 122, 311, 411, 511, 611 der Antriebsmagnete 110, 120, 140, 142, 144, 310, 410, 510, 610 jeweils größer als die spulenzugewandten Breiten 133, 322, 422, 522, 622 der Querschnittsflächen 132, 321, 421, 521, 621 der Kompensationsmagnete 130, 150, 152, 154, 320, 420, 520, 620.

Die Antriebsmagnete 110, 120, 140, 142, 144, 310, 410, 510, 610 sind bei den Magnetanordnungen 100, 300, 400, 500, 600 auf der spulenzugewandten Seite 103 jeweils breiter als auf der spulenabgewandten Seite 104. Die spulenzugewandte Breite 113, 123, 312, 412, 512, 612 der Querschnittsflächen 112, 122, 311, 411, 511, 611 der Antriebsmagnete 110, 120, 140, 142, 144, 310, 410, 510, 610 ist also größer als die spulenabgewandte Breite 114, 124, 313, 413, 513, 613 der Querschnittsflächen 112, 122, 311, 411, 511, 611 der Antriebsmagnete 110, 120, 140, 142, 144, 310, 410, 510, 610 auf der spulenabgewandten Seite 104.

Die Kompensationsmagnete 130, 150, 152, 154, 320, 420, 520, 620 sind bei den Magnetanordnungen 100, 300, 400, 500, 600 auf der spulenzugewandten Seite 103 jeweils schmaler als auf der spulenabgewandten Seite 104. Die spulenzugewandte Breite 133, 322, 422, 522, 622 der Querschnittsflächen 132, 321, 421, 521, 621 der Kompensationsmagnete 130, 150, 152, 154, 320, 420, 520, 620 ist also kleiner als die spulenabgewandte Breite 134, 323, 423, 523, 623 der Querschnittsflächen 132, 321, 421, 521, 621 der Kompensationsmagnete 130, 150, 152, 154, 320, 420, 520, 620 auf der spulenabgewandten Seite 104.

Die spulenzugewandte Breite 113, 123, 312, 412, 512, 612 der Antriebsmagnete 110, 120, 140, 142, 144, 310, 410, 510, 610 entspricht bei den Magnetanordnungen 100, 300, 400, 500, 600 jeweils der spulenabgewandten Breite 134, 323, 423, 523, 623 der Querschnittsflächen 132, 321, 421, 521, 621 der Kompensationsmagnete 130, 150, 152, 154, 320, 420, 520, 620. Die spulenzugewandte Breite 133, 322, 422, 522, 622 der Querschnittsflächen 132, 321, 421, 521, 621 der Kompensationsmagnete 130, 150, 152, 154, 320, 420, 520, 620 entspricht bei den Magnetanordnungen 100, 300, 400, 500, 600 jeweils der spulenabgewandten Breite 114, 124, 313, 413, 513, 613 der Querschnittsflächen 112, 122, 311, 411, 511, 611 der Antriebsmagnete 110, 120, 140, 142, 144, 310, 410, 510, 610.

Bei alternativen Ausführungsformen der Magnetanordnungen 100, 200, 300, 400, 500, 600, bei denen die Querschnittsflächen 132, 321, 421, 521, 621 der Kompensationsmagnete 130, 150, 152, 154, 230, 320, 420, 520 , 620 die Querschnittsflächen 112, 122, 311, 411, 511, 611 der Antriebsmagnete 110, 120, 140, 142, 144, 310, 410, 510, 610 in der Querrichtung 107 hinterschneiden, können die spulenabgewandten Breiten 114, 124, 313, 413, 513, 613 der Querschnittsflächen 112, 122, 311, 411, 511, 611 der Antriebsmagnete 110, 120, 140, 142, 144, 310, 410, 510, 610 auch größer sein als die spulenabgewandten Breiten 134, 323, 423, 523, 623 der Querschnittsflächen 132, 321, 421, 521, 621 der Kompensationsmagnete 130, 150, 152, 154, 320, 420, 520, 620.

Alternativ oder zusätzlich können sich bei derartigen Ausführungsformen die spulenabgewandten Breiten 114, 124, 313, 413, 513, 613 der Querschnittsflächen 112, 122, 311, 411, 511, 611 der Antriebsmagnete 110, 120, 140, 142, 144, 310, 410, 510, 610 oder die spulenabgewandten Breiten 134, 323, 423, 523, 623 der Querschnittsflächen 132, 321, 421, 521, 621 der Kompensationsmagnete 130, 150, 152, 154, 320, 420, 520, 620 von den spulenzugewandten Breiten 133, 322, 422, 522, 622 der Querschnittsflächen 132, 321, 421, 521, 621 der Kompensationsmagnete 130, 150, 152, 154, 320, 420, 520, 620 bzw. von den spulenzugewandten Breiten 113, 123, 312, 412, 512, 612 der Querschnittsflächen 112, 122, 311, 411, 511, 611 der Antriebsmagnete 110, 120, 140, 142, 144, 310, 410, 510, 610 unterscheiden.

Bei den Magnetanordnungen 100, 200, 300, 400, 500, 600 weisen die Querschnittsflächen 112, 122, 311, 411, 511, 611 der Antriebsmagnete 110, 120, 140, 142, 144, 310, 410, 510, 610 und die Querschnittsflächen 132, 321, 421, 521, 621 der Kompensationsmagnete 130, 150, 152, 154, 320, 420, 520, 620 alle den gleichen Flächeninhalt auf. Bei alternativen Ausführungsformen der Magnetanordnungen 100, 200, 300, 400, 500, 600 können auch nur die Querschnittsflächen der Antriebsmagnete und/oder die Querschnittsflächen der Kompensationsmagnete untereinander den gleichen Flächeninhalt aufweisen, während sich die Flächeninhalte der Querschnittsflächen der Antriebsmagnete von den Flächeninhalten der Querschnittsflächen der Kompensationsmagnete unterscheiden.

Ein geeignetes magnetisches Material, aus dem die Magneten der Magnetanordnungen 100, 200, 300, 400, 500, 600 bestehen bzw. das die Magneten der Magnetanordnungen 100, 200, 300, 400, 500, 600 aufweisen können, ist beispielsweise Neodym. Die Magneten der Magnetanordnungen 100, 200, 300, 400, 500, 600 können beispielsweise homogen magnetisiert sein, das heißt, die Magnetisierung ist an jeder Stelle innerhalb der Magneten im Wesentlichen in die gleiche Richtung ausgerichtet. Insbesondere können die Magneten der Magnetanordnungen 100, 200, 300, 400, 500, 600 in jeder Schnittebene, die parallel zu der Schnittebene 106 ausgerichtet ist, über die gesamte Schnittebene die in den Figuren 3 bis 9 dargestellte Magnetisierung aufweisen. Eine Winkelabweichung der Magnetisierung der Magneten der Magnetanordnungen 100, 200, 300, 400, 500, 600 gegenüber der im Zusammenhang mit den Figuren 3 bis 9 beschriebenen Magnetisierung senkrecht bzw. parallel zu dem Pfad 2 kann beispielsweise weniger als 15%, insbesondere weniger als 5% betragen.

Die Magnetisierungen der Antriebsmagnete 110, 120, 140, 142, 144, 310, 410, 510, 610 und der Kompensationsmagnete 130, 150, 152, 154, 320, 420, 520, 620 der Magnetanordnungen 100, 300, 400, 500, 600 weisen jeweils die gleiche Stärke, also den gleichen Betrag, auf und sind damit gleich groß. In diesem Fall führt die Tatsache, dass die Antriebsmagnete 110, 120, 140, 142, 144, 310, 410, 510, 610 und die Kompensationsmagnete 130, 150, 152, 154, 320, 420, 520, 620 in der Schnittebene 106 jeweils Flächen gleicher Größe aufweisen, dazu, dass das Magnetfeld der Antriebsmagnete 110, 120, 140, 142, 144, 310, 410, 510, 610 durch das Magnetfeld der Kompensationsmagnete 130, 150, 152, 154, 320, 420, 520, 620 auf der spulenabgewandten Seite 104 nahezu vollständig abgeschwächt bzw. kompensiert wird, während es auf der spulenzugewandten Seite 104 eine hohe Verstärkung erfährt.

Nicht dargestellte alternative Ausführungsformen einer Magnetanordnung, bei welcher nach Art einer Halbach-Anordnung entlang des Pfades 2 zwischen Antriebsmagneten angeordnete Kompensationsmagnete die Antriebsmagneten auf der spulenabgewandten Seite 104 hinterschneiden, umfassen auch Magnetanordnungen, bei welchen die Antriebsmagneten sich nicht bis zur spulenabgewandten Seite 104 der Magnetanordnung erstrecken. Beispielsweise können die Kompensationsmagneten auf der spulenabgewandten Seite 104 aneinandergrenzen und die Antriebsmagneten in auf der spulenzugewandten Seite 103 angeordneten Ausnehmungen der Kompensationsmagneten angeordnet sein. Dabei können die Querschnittsflächen der Antriebsmagnete und die Querschnittsflächen der Kompensationsmagnete in der Schnittebene 106 jeweils unterschiedliche Flächeninhalte aufweisen.

Bei ebenfalls nicht dargestellten alternativen Ausführungsformen einer Magnetanordnung, bei welcher nach Art einer Halbach-Anordnung entlang des Pfades 2 zwischen Antriebsmagneten angeordnete Kompensationsmagnete die Antriebsmagneten auf der spulenabgewandten Seite 104 hinterschneiden, kann die spulenabgewandte Breite der Antriebsmagneten auch auf null verkürzt sein, so dass die Querschnittsflächen der Antriebsmagneten die spulenabgewandte Seite 104 der Magnetanordnung nur in einem Punkt berühren. Dies kann insbesondere auch bei den in den Figuren 3 bis 9 dargestellten Magnetanordnungen 100, 200, 300, 400, 500, 600 der Fall sein. Bei all diesen alternativen Ausführungsformen können die Querschnittsflächen der Antriebsmagnete und die Querschnittsflächen der Kompensationsmagnete in der Querschnittsebene 106 unterschiedliche Flächeninhalte aufweisen.

Auch können bei alternativen Ausführungsformen einer Magnetanordnung, bei welcher nach Art einer Halbach-Anordnung entlang des Pfades 2 zwischen Antriebsmagneten angeordnete Kompensationsmagnete die Antriebsmagneten auf der spulenabgewandten Seite 104 hinterschneiden, die Flächeninhalte der Antriebsmagnete und/oder die Flächeninhalte der Kompensationsmagnete untereinander abweichende Größen aufweisen, wobei die Größen beispielsweise um 20%, insbesondere um 10%, aber auch nur um 5% voneinander abweichen können.

Bei einer nicht dargestellten alternativen Ausführungsform einer erfindungsgemäßen Magnetanordnung für einen als einen Linearmotor ausgebildeten elektrischen Motor ist die Magnetanordnung dazu ausgebildet, entlang eines Stators des elektrischen Motors angeordnet zu werden. Soweit im Folgenden keine Unterschiede beschrieben werden, ist die Magnetanordnung dabei ausgebildet wie eine der Magnetanordnungen 100, 300, 400, 500, 600. Um die gesamte Länge des Stators des elektrischen Motors zu bedecken, weist die Magnetanordnung eine Anzahl zusätzlicher Antriebsmagneten mit zwischen diesen angeordneten Kompensationsmagneten auf.

In solch einem Fall sind die Polzähne und die Antriebsspulen des elektrischen Motors an einem entlang des Stators beweglichen Läufer angeordnet. Die Antriebsspulen an dem Läufer sind über eine elektrische Zuleitung oder über entlang des Stators angeordnete Kontakte, beispielsweise über Schleifkontakte, mit einer Stromversorgungseinrichtung zur Erzeugung der Spulenströme, mit welchen die Antriebsspulen beaufschlagt werden, verbunden.

Bei einer nicht dargestellten weiteren alternativen Ausführungsform einer erfindungsgemäßen Magnetanordnung ist diese dazu ausgebildet, anstatt in einem Linearmotor in einem rotatorischen Motor eingesetzt zu werden. Eine derartige Magnetanordnung ist im Wesentlichen analog zu den Magnetanordnungen 100, 200, 400, 500, 600 ausgebildet, ist jedoch in der Richtung, die bei den Magnetanordnungen 100, 300, 400, 500, 600 entlang des Pfades 2 orientiert ist, kreisförmig um eine Rotationsachse des elektrischen Motors gekrümmt. Die Antriebsmagnete und die Kompensationsmagnete der Magnetanordnung weisen damit jeweils spulenzugewandte Seitenflächen auf, welche, anstatt gerade entlang des Pfades 2 ausgerichtet zu sein, um die Drehachse des rotatorischen Motors gekrümmt sind. Soweit die Beschreibung der Magnetanordnungen 100, 200, 300, 400, 500, 600 auf den Pfad 2 Bezug nimmt, weist die Magnetanordnung für einen rotatorischen Motor analoge Merkmale auf, die jeweils anstatt auf den geraden Pfad 2 auf einen kreisförmigen Pfad um die Rotationsachse des rotatorischen Motors bezogen sind.

Eine solche Magnetanordnung für einen rotatorischen Motor kann insbesondere Antriebsmagneten und entlang des kreisförmigen Pfades zwischen den Antriebsmagneten angeordnete Kompensationsmagneten umfassen, welche in einer radialen Querschnittsebene senkrecht auf einer Drehachse des rotatorischen Motors gleich große Querschnittsflächen aufweisen. Unabhängig von der Größe der Querschnittsflächen können die Querschnittsflächen beispielsweise analog zu einer der in den Figuren 3, 6, 7, 8 oder 9 dargestellten Formen der Querschnittsflächen der Magneten der Magnetanordnungen 100, 300, 400, 500, 600 ausgebildet sein, wobei die auf der spulenzugewandten Seite 103 und der spulenabgewandten Seite 104 verlaufenden Kanten parallel zu dem kreisförmigen Pfad verlaufen, also als um die Rotationsachse gekrümmte Kreissegmente ausgebildet sind. Die spulenzugewandten und spulenabgewandten Breiten der Querschnittsflächen der Antriebs- und Kompensationsmagnete entsprechen dann der Bogenlänge dieser gekrümmten Kreissegmente.

Auch bei der Magnetanordnung für den rotatorischen Motor sind die spulenzugewandten Breiten der Antriebsmagnete größer als die spulenzugewandten Breiten der Kompensationsmagneten. Eine Magnetisierung der Kompensationsmagneten ist dabei jeweils von einem Antriebsmagneten, dessen Magnetisierung radial nach außen gerichtet ist, in Richtung eines Antriebsmagneten orientiert, dessen Magnetisierung radial nach innen gerichtet ist.

Auch bei der Magnetanordnung für den rotatorischen Motor hinterschneiden die Querschnittsflächen der Kompensationsmagneten in einer der Querrichtung 107 entsprechenden radialen Richtung die Querschnittsflächen der Antriebsmagnete auf der spulenabgewandten Seite. Es sind also in Richtung der spulenabgewandten Seite liegende Teile der Querschnittsflächen der Kompensationsmagnete in radialer Richtung hinter in Richtung der spulenzugewandten Seite liegenden Teilen der Antriebsmagnete angeordnet.

### Bezugszeichenliste

- 1: elektrischer Motor
- 2: Pfad
- 3: Spalt
- 10: Läufer
- 11: Laufrollen
- 12: Läuferkörper
- 20: Antriebsspulen
- 21: Spulenwicklung
- 22: Polzahn
- 23: Spulenzahn
- 24: Zwischenzahn
- 25: Polabstand
- 26: Polzahnbreite
- 30: Stator
- 31: Laufschiene
- 32: Statorgehäuse
- 33: Leiterplatte
- 34: Befestigungsschiene
- 35: Schrauben
- 36: Verbindungselement
- 40: Positionserfassungssystem
- 42: Geberfahne
- 44: Empfängerplatine
- 50: konventionelle Magnetanordnung
- 51: Antriebsmagneten der konventionellen Magnetanordnung
- 52: Breite der Antriebsmagneten
- 53: Abstand der Antriebsmagneten
- 54: Trägervorrichtung
- 60: Halbach-Magnetanordnung
- 61: Antriebsmagneten
- 62: Kompensationsmagneten
- 63: Breite der Antriebsmagneten
- 64: Breite der Kompensationsmagneten
- 100: Magnetanordnung
- 101: Magnetabstand
- 102: Trägervorrichtung
- 103: spulenzugewandte Seite
- 104: spulenabgewandte Seite
- 105: Abdeckung
- 106: Schnittebene
- 107: Querrichtung
- 110: erster Antriebsmagnet
- 111: spulenzugewandte Seitenfläche des ersten Antriebsmagneten
- 112: erste Querschnittsfläche
- 113: spulenzugewandte Breite der ersten Querschnittsfläche
- 114: spulenabgewandte Breite der ersten Querschnittsfläche
- 115: Magnetisierung des ersten Antriebsmagneten
- 120: zweiter Antriebsmagnet
- 121: spulenzugewandte Seitenfläche des zweiten Antriebsmagneten
- 122: zweite Querschnittsfläche
- 123: spulenzugewandte Breite der zweiten Querschnittsfläche
- 124: spulenabgewandte Breite der zweiten Querschnittsfläche
- 125: Magnetisierung des ersten Antriebsmagneten
- 130: Kompensationsmagnet
- 131: spulenzugewandte Seitenfläche des Kompensationsmagneten
- 132: dritte Querschnittsfläche
- 133: spulenzugewandte Breite der dritten Querschnittsfläche
- 134: spulenabgewandte Breite der dritten Querschnittsfläche
- 135: Magnetisierung des ersten Antriebsmagneten
- 140: erster weiterer Antriebsmagnet
- 141: Magnetisierung des ersten weiteren Antriebsmagneten
- 142: zweiter weiterer Antriebsmagnet
- 143: Magnetisierung des zweiten weiteren Antriebsmagneten
- 144: dritter weiterer Antriebsmagnet
- 145: Magnetisierung des dritten weiteren Antriebsmagneten
- 150: erster weiterer Kompensationsmagnet
- 151: Magnetisierung des ersten weiteren Kompensationsmagneten
- 152: zweiter weiterer Kompensationsmagnet
- 153: Magnetisierung des zweiten weiteren Kompensationsmagneten
- 154: dritter weiterer Kompensationsmagnet
- 155: Magnetisierung des dritten weiteren Kompensationsmagneten
- 200: weitere Magnetanordnung
- 203: spulenzugewandte Seite der weiteren Magnetanordnung
- 204: spulenabgewandte Seite der weiteren Magnetanordnung
- 210: erster Antriebsmagnet der weiteren Magnetanordnung

- 215: Magnetisierung des ersten Antriebsmagneten der weiteren Magnetanordnung
- 220: zweiter Antriebsmagnet der weiteren Magnetanordnung
- 225: Magnetisierung des zweiten Antriebsmagneten der weiteren Magnetanordnung
- 230: Kompensationsmagnet der weiteren Magnetanordnung
- 235: Magnetisierung des Kompensationsmagneten der weiteren Magnetanordnung
- 240: weitere Antriebsmagnete der weiteren Magnetanordnung
- 250: weitere Kompensationsmagnete der weiteren Magnetanordnung
- 300: erste alternative Magnetanordnung
- 310: Antriebsmagneten der ersten alternativen Magnetanordnung
- 311: Querschnittsfläche der Antriebsmagneten der ersten alternativen Magnetanordnung
- 312: spulenzugewandte Breite
- 313: spulenabgewandte Breite
- 314: spulenzugewandte Seitenfläche
- 320: Kompensationsmagneten der ersten alternativen Magnetanordnung
- 321: Querschnittsfläche der Kompensationsmagneten der ersten alternativen Magnetanordnung
- 322: spulenzugewandte Breite
- 323: spulenabgewandte Breite
- 324: spulenzugewandte Seitenfläche
- 400: zweite alternative Magnetanordnung
- 410: Antriebsmagneten der zweiten alternativen Magnetanordnung
- 411: Querschnittsfläche der Antriebsmagneten der zweiten alternativen Magnetanordnung
- 412: spulenzugewandte Breite
- 413: spulenabgewandte Breite
- 420: Kompensationsmagneten der ersten alternativen Magnetanordnung
- 421: Querschnittsfläche der Kompensationsmagneten der zweiten alternativen Magnetanordnung
- 422: spulenzugewandte Breite
- 423: spulenabgewandte Breite
- 500: dritte alternative Magnetanordnung
- 510: Antriebsmagneten der dritten alternativen Magnetanordnung
- 511: Querschnittsfläche der Antriebsmagneten der dritten alternativen Magnetanordnung
- 512: spulenzugewandte Breite
- 513: spulenabgewandte Breite
- 520: Kompensationsmagneten der dritten alternativen Magnetanordnung
- 521: Querschnittsfläche der Kompensationsmagneten der dritten alternativen Magnetanordnung
- 522: spulenzugewandte Breite
- 523: spulenabgewandte Breite
- 600: vierte alternative Magnetanordnung
- 610: Antriebsmagneten der vierten alternativen Magnetanordnung
- 611: Querschnittsfläche der Antriebsmagneten der vierten alternativen Magnetanordnung
- 612: spulenzugewandte Breite
- 613: spulenabgewandte Breite
- 620: Kompensationsmagneten der vierten alternativen Magnetanordnung
- 621: Querschnittsfläche der Kompensationsmagneten der vierten alternativen Magnetanordnung
- 622: spulenzugewandte Breite
- 623: spulenabgewandte Breite

## Patentansprüche

1. Magnetanordnung (100, 200, 300, 400, 500, 600) zur Wechselwirkung mit Antriebsspulen (20) eines elektrischen Motors (1),
wobei die Magnetanordnung (100, 200, 300, 400, 500, 600) zumindest einen ersten Antriebsmagneten (110, 210, 310, 410, 510, 610), einen zweiten Antriebsmagneten (120, 220, 310, 410, 510) und einen Kompensationsmagneten (130, 230, 320, 420, 520, 620) umfasst, welche zwischen einer spulenzugewandten Seite (103) der Magnetanordnung (100, 200, 300, 400, 500, 600) und einer spulenabgewandten Seite (104) der Magnetanordnung (100, 200, 300, 400, 500, 600) angeordnet sind, wobei der Kompensationsmagnet (130, 230, 320, 420, 520, 620) zwischen dem ersten Antriebsmagneten (110, 210, 310, 410, 510, 610) und dem zweiten Antriebsmagneten (120, 220, 310, 410, 510) angeordnet ist,
wobei der erste Antriebsmagnet (110, 210, 310, 410, 510, 610) eine Magnetisierung (115) aufweist, die von der spulenabgewandten Seite (104) der Magnetanordnung (100, 200, 300, 400, 500, 600) in Richtung der spulenzugewandten Seite (103) der Magnetanordnung (100, 200, 300, 400, 500, 600) orientiert ist,
wobei der zweite Antriebsmagnet (120, 220, 310, 410, 510) eine Magnetisierung (125) aufweist, die von der spulenzugewandten Seite (103) der Magnetanordnung (100, 200, 300, 400, 500, 600) in Richtung der spulenabgewandten Seite (104) der Magnetanordnung (100, 200, 300, 400, 500, 600) orientiert ist,
wobei der Kompensationsmagnet (130, 230, 320, 420, 520, 620) eine Magnetisierung (135) aufweist, die von dem zweiten Antriebsmagneten (120, 220, 310, 410, 510) in Richtung des ersten Antriebsmagneten (110, 210, 310, 410, 510, 610) orientiert ist,
wobei der erste Antriebsmagnet (110, 210, 310, 410, 510, 610) eine erste Querschnittsfläche (112, 311, 411, 511, 611), der zweite Antriebsmagnet (120, 220, 310, 410, 510) eine zweite Querschnittsfläche (122, 311, 411, 511, 611) und der Kompensationsmagnet (130, 230, 320, 420, 520, 620) eine dritte Querschnittsfläche (132, 321, 421, 521, 621) aufweist,
wobei die erste Querschnittsfläche (112, 311, 411, 511, 611), die zweite Querschnittsfläche (122, 311, 411, 511, 611) und die dritte Querschnittsfläche (132, 321, 421, 521, 621) in einer gemeinsamen Schnittebene (106) durch die Magnetanordnung (100, 200, 300, 400, 500, 600) liegen, die parallel zu Spulenachsen der Antriebsspulen (20) orientiert ist,
wobei sich die erste Querschnittsfläche (112, 311, 411, 511, 611), die zweite Querschnittsfläche (122, 311, 411, 511, 611) und die dritte Querschnittsfläche (132, 321, 421, 521, 621) in der Schnittebene (106) jeweils zwischen der spulenzugewandten Seite (103) der Magnetanordnung (100, 200, 300, 400, 500, 600) und der spulenabgewandten Seite (104) der Magnetanordnung (100, 200, 300, 400, 500, 600) erstrecken, wobei eine spulenabgewandte Breite (114, 313, 413, 513, 613) der ersten Querschnittsfläche (112, 311, 411, 511, 611) kleiner ist als eine spulenzugewandte Breite (113, 312, 412, 512, 612) der ersten Querschnittsfläche (112, 311, 411, 511, 611) und eine spulenabgewandte Breite (124, 313, 413, 513, 613) der zweiten Querschnittsfläche (122, 311, 411, 511, 611) kleiner ist als eine spulenzugewandte Breite (123, 412, 512, 612) der zweiten Querschnittsfläche (122, 311, 411, 511, 611),
wobei der erste Antriebsmagnet (110, 210, 310, 410, 510, 610), der zweite Antriebsmagnet (120, 220, 310, 410, 510) und der Kompensationsmagnet (130, 230, 320, 420, 520, 620) aneinander anschließend angeordnet sind,
wobei die dritte Querschnittsfläche (132, 321, 421, 521, 621) die erste Querschnittsfläche (112, 311, 411, 511, 611) und die zweite Querschnittsfläche (122, 311, 411, 511, 611) auf der spulenabgewandten Seite (104) hinterschneidet,
wobei die erste Querschnittsfläche (112, 311, 411, 511, 611), die zweite Querschnittsfläche (122, 311, 411, 511, 611) und die dritte Querschnittsfläche (132, 321, 421, 521, 621) jeweils als ein gleichschenkliges Trapez ausgebildet sind,
**dadurch gekennzeichnet,**
**dass** eine spulenabgewandte Breite (134, 423, 523, 623) der dritten Querschnittsfläche (132, 321, 421, 521, 621) der spulenzugewandten Breite (113, 312, 412, 512, 612) der ersten Querschnittsfläche (112, 311, 411, 511, 611) und der spulenzugewandten Breite (123, 312, 412, 512, 612) der zweiten Querschnittsfläche (122, 311, 411, 511, 611) entspricht,
**dass** eine spulenzugewandte Breite (133, 422, 522, 622) der dritten Querschnittsfläche (132, 321, 421, 521, 621) der spulenabgewandten Breite (114, 313, 413, 513, 613) der ersten Querschnittsfläche (112, 311, 411, 511, 611) und der spulenabgewandten Breite (124, 313, 413, 513, 613) der zweiten Querschnittsfläche (122, 311, 411, 511, 611) entspricht, und
**dass** der Flächeninhalt der ersten Querschnittsfläche (112, 311, 411, 511, 611), der Flächeninhalt der zweiten Querschnittsfläche (122, 311, 411, 511, 611) und der Flächeninhalt der dritten Querschnittsfläche (132, 321, 421, 521, 621) gleich groß sind.

2. Magnetanordnung (100, 200, 300, 400, 500, 600) gemäß einem der vorhergehenden Ansprüche,
wobei eine spulenzugewandte Seitenfläche (111, 314) des ersten Antriebsmagneten (110, 210, 310, 410, 510, 610), eine spulenzugewandte Seitenfläche (121, 314) des zweiten Antriebsmagneten (120, 220, 310, 410, 510) und eine spulenzugewandte Seitenfläche (131, 324) des Kompensationsmagneten (130, 230, 320, 420, 520, 620) rechteckig ausgebildet sind.

3. Magnetanordnung (100, 200, 300, 400, 500, 600) gemäß einem der vorhergehenden Ansprüche,
wobei die Magnetanordnung (100, 200, 300, 400, 500, 600) an einer Trägervorrichtung (102) angeordnet ist,
wobei die Trägervorrichtung (102) aus einem unmagnetischen Material, insbesondere aus Aluminium, besteht.

4. Magnetanordnung (100, 200, 300, 400, 500, 600) gemäß einem der vorhergehenden Ansprüche,
wobei die Magnetanordnung (100, 200, 300, 400, 500, 600) eine Abdeckung (105) aufweist,
wobei die Abdeckung (105) an der spulenzugewandten Seite (103) der Magnetanordnung (100, 200, 300, 400, 500, 600) angeordnet ist.

5. Läufer (10) für einen elektrischen Motor (1),
wobei der Läufer (10) eine Magnetanordnung (100, 200, 300, 400, 500, 600) gemäß einem der vorhergehenden Ansprüche umfasst.

6. Elektrischer Motor (1),
wobei der elektrische Motor (1) einen Läufer (10) gemäß Anspruch 5 umfasst,
wobei die Antriebsspulen (20) des elektrischen Motors (1) über in einem Polabstand (25) voneinander beabstandet angeordnete Polzähne (22) mit der Magnetanordnung (100, 200, 300, 400, 500, 600) des Läufers (10) wechselwirken und wobei der Polabstand (25) und ein Magnetabstand (101) zwischen dem ersten Antriebsmagneten (110, 210, 310, 410, 510, 610) und dem zweiten Antriebsmagneten (120, 220, 310, 410, 510) der Magnetanordnung (100, 200, 300, 400, 500, 600) derart bemessen sind, dass es keine Position des Läufers (10) entlang des Stators (30) gibt, in der zwei oder mehr der Antriebsmagnete (110, 120, 140, 142, 144) die gleiche relative Lage gegenüber den Polzähnen (22) aufweisen.

7. Elektrischer Motor (1) gemäß Anspruch 6,
wobei die Magnetanordnung (100, 200, 300, 400, 500, 600) eine Anzahl M von Antriebsmagneten (110, 120, 140, 142, 144, 210, 220, 240, 310, 410, 510, 610), die jeweils in dem Magnetabstand (101) voneinander beabstandet angeordnet sind, aufweist und
wobei das M-fache des Magnetabstandes (101) einem ganzzahligen Vielfachen des Polabstandes (25) entspricht.

## Claims

1. Magnet arrangement (100, 200, 300, 400, 500, 600) for interacting with drive coils (20) of an electric motor (1),
wherein the magnet arrangement (100, 200, 300, 400, 500, 600) comprises at least a first drive magnet (110, 210, 310, 410, 510, 610), a second drive magnet (120, 220, 310, 410, 510) and a compensation magnet (130, 230, 320, 420, 520, 620) which are arranged between a coil-facing side (103) of the magnet arrangement (100, 200, 300, 400, 500, 600) and a coil-averted side (104) of the magnet arrangement (100, 200, 300, 400, 500, 600),
wherein the compensation magnet (130, 230, 320, 420, 520, 620) is arranged between the first drive magnet (110, 210, 310, 410, 510, 610) and the second drive magnet (120, 220, 310, 410, 510),
wherein the first drive magnet (110, 210, 310, 410, 510, 610) has a magnetization (115) which is oriented from the coil-averted side (104) of the magnet arrangement (100, 200, 300, 400, 500, 600) in the direction of the coil-facing side (103) of the magnet arrangement (100, 200, 300, 400, 500, 600),
wherein the second drive magnet (120, 220, 310, 410, 510) has a magnetization (125) which is oriented from the coil-facing side (103) of the magnet arrangement (100, 200, 300, 400, 500, 600) in the direction of the coil-averted side (104) of the magnet arrangement (100, 200, 300, 400, 500, 600), wherein the compensation magnet (130, 230, 320, 420, 520, 620) has a magnetization (135) which is oriented from the second drive magnet (120, 220, 310, 410, 510) in the direction of the first drive magnet (110, 210, 310, 410, 510, 610),
wherein the first drive magnet (110, 210, 310, 410, 510, 610) has a first cross-sectional area (112, 311, 411, 511, 611), the second drive magnet (120, 220, 310, 410, 510) has a second cross-sectional area (122, 311, 411, 511, 611) and the compensation magnet (130, 230, 320, 420, 520, 620) has a third cross-sectional area (132, 321, 421, 521, 621), wherein the first cross-sectional area (112, 311, 411, 511, 611), the second cross-sectional area (122, 311, 411, 511, 611) and the third cross-sectional area (132, 321, 421, 521, 621) lie in a common section plane (106) through the magnet arrangement (100, 200, 300, 400, 500, 600), which section plane is oriented parallel to coil axes of the drive coils (20),
wherein the first cross-sectional area (112, 311, 411, 511, 611), the second cross-sectional area (122, 311, 411, 511, 611) and the third cross-sectional area (132, 321, 421, 521, 621) extend in the section plane (106) in each case between the coil-facing side (103) of the magnet arrangement (100, 200, 300, 400, 500, 600) and the coil-averted side (104) of the magnet arrangement (100, 200, 300, 400, 500, 600),
wherein a coil-averted width (114, 313, 413, 513, 613) of the first cross-sectional area (112, 311, 411, 511, 611) is smaller than a coil-facing width (113, 312, 412, 512, 612) of the first cross-sectional area (112, 311, 411, 511, 611), and a coil-averted width (124, 313, 413, 513, 613) of the second cross-sectional area (122, 311, 411, 511, 611) is smaller than a coil-facing width (123, 412, 512, 612) of the second cross-sectional area (122, 311, 411, 511, 611),
wherein the first drive magnet (110, 210, 310, 410, 510, 610), the second drive magnet (120, 220, 310, 410, 510) and the compensation magnet (130, 230, 320, 420, 520, 620) are arranged so as to adjoin one another,
wherein the third cross-sectional area (132, 321, 421, 521, 621) undercuts the first cross-sectional area (112, 311, 411, 511, 611) and the second cross-sectional area (122, 311, 411, 511, 611) on the coil-averted side (104),
wherein the first cross-sectional area (112, 311, 411, 511, 611), the second cross-sectional area (122, 311, 411, 511, 611) and the third cross-sectional area (132, 321, 421, 521, 621) are each configured as an isosceles trapezoid, **characterized**
**in that** a coil-averted width (134, 423, 523, 623) of the third cross-sectional area (132, 321, 421, 521, 621) corresponds to the coil-facing width (113, 312, 412, 512, 612) of the first cross-sectional area (112, 311, 411, 511, 611) and to the coil-facing width (123, 312, 412, 512, 612) of the second cross-sectional area (122, 311, 411, 511, 611),
**in that** a coil-facing width (133, 422, 522, 622) of the third cross-sectional area (132, 321, 421, 521, 621) corresponds to the coil-averted width (114, 313, 413, 513, 613) of the first cross-sectional area (112, 311, 411, 511, 611) and to the coil-averted width (124, 313, 413, 513, 613) of the second cross-sectional area (122, 311, 411, 511, 611), and in that the surface area of the first cross-sectional area (112, 311, 411, 511, 611), the surface area of the second cross-sectional area (122, 311, 411, 511, 611) and the surface area of the third cross-sectional area (132, 321, 421, 521, 621) are of equal size.

2. Magnet arrangement (100, 200, 300, 400, 500, 600) according to any one of the preceding claims, wherein a coil-facing side surface (111, 314) of the first drive magnet (110, 210, 310, 410, 510, 610), a coil-facing side surface (121, 314) of the second drive magnet (120, 220, 310, 410, 510) and a coil-facing side surface (131, 324) of the compensation magnet (130, 230, 320, 420, 520, 620) are of rectangular configuration.

3. Magnet arrangement (100, 200, 300, 400, 500, 600) according to any one of the preceding claims, wherein the magnet arrangement (100, 200, 300, 400, 500, 600) is arranged on a carrier device (102), wherein the carrier device (102) is composed of a non-magnetic material, in particular of aluminum.

4. Magnet arrangement (100, 200, 300, 400, 500, 600) according to any one of the preceding claims, wherein the magnet arrangement (100, 200, 300, 400, 500, 600) has a cover (105),
wherein the cover (105) is arranged on the coil-facing side (103) of the magnet arrangement (100, 200, 300, 400, 500, 600).

5. Mover (10) for an electric motor (1),
wherein the mover (10) comprises a magnet arrangement (100, 200, 300, 400, 500, 600) according to any one of the preceding claims.

6. Electric motor (1),
wherein the electric motor (1) comprises a mover (10) according to Claim 5,
wherein the drive coils (20) of the electric motor (1) interact, by means of pole teeth (22) which are arranged spaced apart from one another by a pole spacing (25), with the magnet arrangement (100, 200, 300, 400, 500, 600) of the mover (10), and wherein the pole spacing (25) and a magnet spacing (101) between the first drive magnet (110, 210, 310, 410, 510, 610) and the second drive magnet (120, 220, 310, 410, 510) of the magnet arrangement (100, 200, 300, 400, 500, 600) are dimensioned such that there is no position of the mover (10) along the stator (30) in which two or more of the drive magnets (110, 120, 140, 142, 144) have the same relative position with respect to the pole teeth (22).

7. Electric motor (1) according to Claim 6,
wherein the magnet arrangement (100, 200, 300, 400, 500, 600) has a number M of drive magnets (110, 120, 140, 142, 144, 210, 220, 240, 310, 410, 510, 610) which are in each case arranged so as to be spaced apart from one another by the magnet spacing (101), and
wherein M times the magnet spacing (101) corresponds to an integer multiple of the pole spacing (25).

## Revendications

1. Arrangement d'aimants (100, 200, 300, 400, 500, 600) destiné à coopérer avec des bobines d'entraînement (20) d'un moteur électrique (1),
l'arrangement d'aimants (100, 200, 300, 400, 500, 600) comportant au moins un premier aimant d'entraînement (110, 210, 310, 410, 510, 610), un deuxième aimant d'entraînement (120, 220, 310, 410, 510) et un aimant de compensation (130, 230, 320, 420, 520, 620), lesquels sont disposés entre un côté faisant face aux bobines (103) de l'arrangement d'aimants (100, 200, 300, 400, 500, 600) et un côté à l'opposé des bobines (104) de l'arrangement d'aimants (100, 200, 300, 400, 500, 600), l'aimant de compensation (130, 230, 320, 420, 520, 620) étant disposé entre le premier aimant d'entraînement (110, 210, 310, 410, 510, 610) et le deuxième aimant d'entraînement (120, 210, 310, 410, 510),
le premier aimant d'entraînement (110, 210, 310, 410, 510, 610) possédant une magnétisation (115) qui est orientée du côté à l'opposé des bobines (104) de l'arrangement d'aimants (100, 200, 300, 400, 500, 600) en direction du côté faisant face aux bobines (103) de l'arrangement d'aimants (100, 200, 300, 400, 500, 600), le deuxième aimant d'entraînement (120, 220, 310, 410, 510) possédant une magnétisation (125) qui est orientée du côté faisant face aux bobines (103) de l'arrangement d'aimants (100, 200, 300, 400, 500, 600) en direction du côté à l'opposé des bobines (104) de l'arrangement d'aimants (100, 200, 300, 400, 500, 600),
l'aimant de compensation (130, 230, 320, 420, 520, 620) présentant une magnétisation (135), qui, en partant du deuxième aimant d'entraînement (120, 220, 310, 410, 510), est orientée dans la direction du premier aimant d'entraînement (110, 210, 310, 410, 510, 610), le premier aimant d'entraînement (110, 210, 310, 410, 510, 610) possédant une première surface de section transversale (112, 311, 411, 511, 611), le deuxième aimant d'entraînement (120, 220, 310, 410, 510) une deuxième surface de section transversale (122, 311, 411, 511, 611) et l'aimant de compensation (130, 230, 320, 420, 520, 620) une troisième surface de section transversale (132, 321, 421, 521, 621),
la première surface de section transversale (112, 311, 411, 511, 611), la deuxième surface de section transversale (122, 311, 411, 511, 611) et la troisième surface de section transversale (132, 321, 421, 521, 621) se trouvant dans un plan de coupe (106) commun à travers l'arrangement d'aimants (100, 200, 300, 400, 500, 600), lequel est orienté parallèlement aux axes de bobine des bobines d'entraînement (20),
la première surface de section transversale (112, 311, 411, 511, 611), la deuxième surface de section transversale (122, 311, 411, 511, 611) et la troisième surface de section transversale (132, 321, 421, 521, 621) s'étendant dans le plan de coupe (106) respectivement entre le côté faisant face aux bobines (103) de l'arrangement d'aimants (100, 200, 300, 400, 500, 600) et le côté à l'opposé des bobines (104) de l'arrangement d'aimants (100, 200, 300, 400, 500, 600),
une largeur à l'opposé des bobines (114, 313, 413, 513, 613) de la première surface de section transversale (112, 311, 411, 511, 611) étant inférieure à une largeur faisant face aux bobines (113, 312, 412, 512, 612) de la première surface de section transversale (112, 311, 411, 511, 611) et une largeur à l'opposé des bobines (124, 313, 413, 513, 613) de la deuxième surface de section transversale (122, 311, 411, 511, 611) étant inférieure à une largeur faisant face aux bobines (123, 412, 512, 612) de la deuxième surface de section transversale (122, 311, 411, 511, 611),
le premier aimant d'entraînement (110, 210, 310, 410, 510, 610), le deuxième aimant d'entraînement (120, 220, 310, 410, 510) et l'aimant de compensation (130, 230, 320, 420, 520, 620) étant disposés connectés l'un contre l'autre,
la troisième surface de section transversale (132, 321, 421, 521, 621) détalonnant la première surface de section transversale (112, 311, 411, 511, 611) et la deuxième surface de section transversale (122, 311, 411, 511, 611) sur le côté à l'opposé des bobines (104),
la première surface de section transversale (112, 311, 411, 511, 611), la deuxième surface de section transversale (122, 311, 411, 511, 611) et la troisième surface de section transversale (132, 321, 421, 521, 621) étant respectivement réalisées sous la forme d'un trapèze isocèle,
**caractérisé en ce**
**qu'**une largeur à l'opposé des bobines (134, 423, 523, 623) de la troisième surface de section transversale (132, 321, 421, 521, 621) correspond à la largeur faisant face aux bobines (113, 312, 412, 512, 612) de la première surface de section transversale (112, 311, 411, 511, 611) et à la largeur faisant face aux bobines (123, 312, 412, 512, 612) de la deuxième surface de section transversale (122, 311, 411, 511, 611),
**qu'**une largeur faisant face aux bobines (133, 422, 522, 622) de la troisième surface de section transversale (132, 321, 421, 521, 621) correspond à la largeur à l'opposé des bobines (114, 313, 413, 513, 613) de la première surface de section transversale (112, 311, 411, 511, 611) et à la largeur à l'opposé des bobines (124, 313, 413, 513, 613) de la deuxième surface de section transversale (122, 311, 411, 511, 611), et
**que** l'aire de la première surface de section transversale (112, 311, 411, 511, 611), l'aire de la deuxième surface de section transversale (122, 311, 411, 511, 611) et l'aire de la troisième surface de section transversale (132, 321, 421, 521, 621) sont identiques.

2. Arrangement d'aimants (100, 200, 300, 400, 500, 600) selon l'une des revendications précédentes, une surface latérale faisant face aux bobines (111, 314) du premier aimant d'entraînement (110, 210, 310, 410, 510, 610), une surface latérale faisant face aux bobines (121, 314) du deuxième aimant d'entraînement (120, 220, 310, 410, 510) et une surface latérale faisant face aux bobines (131, 324) de l'aimant de compensation (130, 230, 320, 420, 520, 620) étant de configuration rectangulaire.

3. Arrangement d'aimants (100, 200, 300, 400, 500, 600) selon l'une des revendications précédentes, l'arrangement d'aimants (100, 200, 300, 400, 500, 600) étant disposé sur un dispositif porteur (102),
le dispositif porteur (102) étant composé d'un matériau non magnétique, en particulier d'aluminium.

4. Arrangement d'aimants (100, 200, 300, 400, 500, 600) selon l'une des revendications précédentes, l'arrangement d'aimants (100, 200, 300, 400, 500, 600) possédant un capot (105), le capot (105) étant disposé du côté faisant face aux bobines (103) de l'arrangement d'aimants (100, 200, 300, 400, 500, 600).

5. Rotor (10) pour un moteur électrique (1), le rotor (10) comportant un arrangement d'aimants (100, 200, 300, 400, 500, 600) selon l'une des revendications précédentes.

6. Moteur électrique (1),
le moteur électrique (1) comportant un rotor (10) selon la revendication 5,
les bobines d'entraînement (20) du moteur électrique (1) coopérant avec l'arrangement d'aimants (100, 200, 300, 400, 500, 600) du rotor (10) par le biais de dents polaires (22) disposées espacées les unes des autres dans un écart entre pôles (25) et
l'écart entre pôles (25) et un écart entre aimants (101) entre le premier aimant d'entraînement (110, 210, 310, 410, 510, 610) et le deuxième aimant d'entraînement (120, 220, 310, 410, 510) de l'arrangement d'aimants (100, 200, 300, 400, 500, 600) étant dimensionnés de telle sorte qu'il n'existe aucune position du rotor (10) le long du stator (30) dans laquelle deux ou plus des aimants d'entraînement (110, 120, 140, 142, 144) présentent la même position relative par rapport aux dents polaires (22) .

7. Moteur électrique (1) selon la revendication 6, l'arrangement d'aimants (100, 200, 300, 400, 500, 600) possédant un nombre M d'aimants d'entraînement (110, 120, 140, 142, 144, 210, 220, 240, 310, 410, 510, 610) qui sont respectivement disposés espacés les uns des autres de l'écart entre aimants (101),
M fois l'écart entre aimants (101) correspondant à un multiple entier de l'écart entre pôles (25).
